(19) Europäisches Patentamt / European Patent Office / Office européen des brevets

(11) **EP 4 242 579 B1**

(12) **EUROPEAN PATENT SPECIFICATION**

(45) Date of publication and mention of the grant of the patent:
**24.04.2024 Bulletin 2024/17**

(21) Application number: **23155955.0**

(22) Date of filing: **10.02.2023**

(51) International Patent Classification (IPC):
***G01B 9/02015*** *(2022.01)*    ***G01B 9/0209*** *(2022.01)*
***G01B 9/02004*** *(2022.01)*    ***G01B 11/02*** *(2006.01)*

(52) Cooperative Patent Classification (CPC):
**G01B 9/02027; G01B 9/02004; G01B 9/02069; G01B 9/02084; G01B 9/0209; G01B 11/026;** G01B 2210/60

(54) **OPTICAL INTERFEROMETRIC RANGE SENSOR**

OPTISCHER INTERFEROMETRISCHER ENTFERNUNGSMESSER

CAPTEUR DE DISTANCE INTERFEROMETRIQUE OPTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.03.2022 JP 2022038245**

(43) Date of publication of application:
**13.09.2023 Bulletin 2023/37**

(73) Proprietor: **OMRON Corporation Kyoto 600-8530 (JP)**

(72) Inventors:
• **HAYAKAWA, Masayuki**
  **Kyoto-shi 600-8530 (JP)**
• **KIMURA, Kazuya**
  **Kyoto-shi 600-8530 (JP)**

(74) Representative: **Horn Kleimann Waitzhofer Schmid-Dreyer**
  **Patent- und Rechtsanwälte PartG mbB**
  **Theresienhöhe 12**
  **80339 München (DE)**

(56) References cited:
  **WO-A2-2005/024379**    **US-A1- 2007 171 425**

**Description**

CROSS-REFERENCE TO RELATED APPLICATION

This application claims priority to Japanese Patent Application No. 2022-038245 filed on March 11, 2022.

FIELD

The present invention relates to an optical interferometric range sensor.

BACKGROUND

Nowadays, optical range sensors are commonly used to contactlessly measure the distance to a measurement target. For example, a known optical range sensor includes an optical interferometric range sensor that generates, from light emitted from a wavelength swept light source, interference light based on reference light and measurement light and measures the distance to a measurement target based on the interference light.

Another known optical interferometric range sensor irradiates a measurement target with multiple beams and measures the measurement target with high accuracy.

JP 2 686 124 B2 describes an optical measurement device that causes a returning beam component of a reference beam reflected from the end faces of multiple optical fibers to coherently interfere with a reflected component of a measurement beam reflected from a surface of a measurement target to obtain stable measurement results.

US 2007 / 0 171 425 A1 discloses a system that includes a first object mounted relative to a second object, the first object being moveable with respect to the second object. The system includes a plurality of interferometers each configured to derive a first wavefront and a second wavefront from input radiation and to combine the first and second wavefronts to provide output radiation including information about an optical path length difference between the paths of the first and second wavefronts, each interferometer including a reflective element positioned in the path of the first wavefront, and at least one of the interferometer's reflective element is mounted on the first object. The system also includes a plurality of fiber waveguides and an electronic controller. Each fiber waveguide is configured to deliver the input radiation to a corresponding interferometer or deliver the output radiation from the corresponding interferometer to a corresponding detector. The electronic controller is configured to monitor a degree of freedom of the first object relative to the second object based on the information from at least one of the interferometers, wherein the degree of freedom is an absolute displacement between the first and second objects.

WO 2005 / 024 379 A2 discloses a fiber optic system including a plurality of optical sensors, each with an identification system. The fiber optic system includes a fiber extending a distance, a demodulator, and at least one coupler, optical sensor and corresponding identification system. The identification system is powered by light shunted from the fiber by the coupler to a modulating device. The modulating device modulates the light and transmits it to a power converting device, which transforms the light energy into electrical energy. The electrical energy powers a high temperature integrated circuit upon which is stored a digital identification of a respective optical sensor. The integrated circuit, upon being powered up, sends a modulated response back up to the surface through the modulating device. Alternatively, a passive identification system is described, where reflective devices are placed at pre-determined locations along the length of the fiber. As the optical beam passes through the reflective devices, identification information for a sensor is encoded onto the beam. An optical frequency domain reflectometer generates the optical beam and detects the encoded information.

SUMMARY

TECHNICAL PROBLEM

The known optical interferometric range sensor irradiating a measurement target with multiple beams may include multiple single spot heads each emitting a single beam or including a single multi-spot head that emits multiple beams.

The use of the multi-spot head may place a user in an insecure situation when multiple laser beams are emitted to a predetermined area. For example, safety based on safety standards for laser beams may be compromised. Although the amount of laser beams to be emitted may be reduced to increase safety, the use of multiple single spot heads located at predetermined intervals may lower the measurement accuracy due to the small amount of laser beams being emitted.

One or more aspects of the present invention are directed to an optical interferometric range sensor that can adjust the amount of light as appropriate for a sensor head.

SOLUTION TO PROBLEM

An optical interferometric range sensor according to the present invention includes a light source that emits light with a changing wavelength, a light splitter that splits the light emitted from the light source into a plurality of beams to be incident on a plurality of spots, an interferometer that generates, for each of the plurality of beams of the split light incident on a corresponding spot of the plurality of spots, interference light based on measurement light emitted from a sensor head to a measurement target and reflected from the measurement target and reference light traveling on an optical path at least partially different from an optical path of the measurement light, a light receiver that receives the interference light from the interferometer to convert the interference light to an electric signal, a processor that calculates a distance from the sensor head to the measurement target based on the electric signal resulting from conversion performed by the light receiver, an identifier that identifies the sensor head based on a beat signal generated by the interferometer, and a light adjuster that adjusts an amount of light to be emitted from the sensor head to the measurement target based on the sensor head identified by the identifier, wherein the beat signal results from a portion of the light emitted from the light source and received by the interferometer being reflected from a component of the interferometer including a reflective surface.

In this aspect, the identifier identifies the sensor head based on the beat signal generated by the interferometer, and the light adjuster adjusts, based on the sensor head identified by the identifier, the amount of light emitted from the sensor head to the measurement target. This allows the amount of light incident on the measurement target to be adjusted as appropriate for the sensor head, thus allowing the measurement distance from the sensor head to the measurement target to be measured with high accuracy while satisfying the safety standards for laser beam irradiation. This reduces the user work of, for example, identifying the type of sensor head and manually setting the corresponding amount of light in each measurement operation.

In the above aspect, the sensor head may include a single spot head or a multi-spot head.

In this aspect, the optical interferometric range sensor can identify the sensor head being used as multiple single spot heads or a single multi-spot head for multiple spots and adjust the amount of light as appropriate for each head.

In the above aspect, the light adjuster may adjust an amount of light to be transmitted to the light splitter to be less than or equal to a predetermined value when the identifier identifies the sensor head.

In this aspect, when the sensor head is unidentified, the light adjuster adjusts the amount of light to less than or equal to the predetermined value to satisfy the safety standards for laser beams.

In the above aspect, the predetermined value may be an amount of light adjusted for the sensor head identified as a multi-spot head by the identifier.

In this aspect, when the sensor head is unidentified, the light adjuster adjusts the amount of light to the amount for a sensor head being a multi-spot head. The safety standards for laser beams can be sufficiently satisfied for the sensor head that may be a multi-spot head.

In the above aspect, the identifier may identify the sensor head based on at least one of a peak frequency of the beat signal or the number of peaks in the beat signal.

In this aspect, the identifier identifies the sensor head based on at least one of the peak frequency of the beat signal or the number of peaks in the beat signal, thus facilitating identification of the sensor head without causing the user to determine the type of sensor head.

In this aspect, the beat signal results from a portion of the light emitted from the light source and received by the interferometer being reflected from the component of the interferometer including the reflective surface, thus facilitating identification of the sensor head without causing the user to determine the type of sensor head.

In the above aspect, the reflective surface may be located inside the sensor head.

In this aspect, the reflective surface is located inside the sensor head. This reduces the user work including determination and preparation associated with the sensor head, other than attaching the sensor head, thus facilitating identification of the sensor head.

In the above aspect, the reflective surface may be located on an objective lens included in the sensor head.

In this aspect, the reflective surface is located on the objective lens included in the sensor head, thus eliminating preparation of, for example, a separate component and facilitating identification of the sensor head.

In the above aspect, the reflective surface may be located on a collimating lens included in the sensor head.

In this aspect, the reflective surface is located on the collimating lens included in the sensor head, thus eliminating preparation of, for example, a separate component and facilitating identification of the sensor head.

In the above aspect, the reflective surface may be located inside an optical fiber that guides the light emitted from the light source to the sensor head.

In this aspect, the reflective surface is located inside the optical fiber that guides light emitted from the light source to the sensor head, thus facilitating identification of the sensor head without a reflective surface in the sensor head.

ADVANTAGEOUS EFFECTS

The optical interferometric range sensor according to the above aspects of the present invention can adjust the amount of light as appropriate for the sensor head.

BRIEF DESCRIPTION OF THE DRAWINGS

FIG. 1 is a schematic external view of a displacement sensor 10 according to an embodiment of the present disclosure.
FIG. 2 is a flowchart showing measurement of a measurement target T with the displacement sensor 10 according to the embodiment of the present disclosure.
FIG. 3 is a functional block diagram of a sensor system 1 including the displacement sensor 10 according to the embodiment of the present disclosure.
FIG. 4 is a flowchart showing measurement of the measurement target T with the sensor system 1 including the displacement sensor 10 according to the embodiment of the present disclosure.
FIG. 5A is a diagram describing a basic measurement procedure of the measurement target T with the displacement sensor 10 according to the embodiment of the present disclosure.
FIG. 5B is a diagram describing another basic measurement procedure of the measurement target T with the displacement sensor 10 according to the embodiment of the present disclosure.
FIG. 6A is a schematic perspective view of a sensor head 20.
FIG. 6B is a schematic view of the sensor head 20 showing the internal structure.
FIG. 7 is a block diagram of a controller 30 showing signal processing in the controller 30.
FIG. 8 is a flowchart showing a method for calculating the distance to the measurement target T with a processor 59 in the controller 30.
FIG. 9A is a diagram of conversion of a waveform signal (voltage versus time) to a frequency spectrum (voltage versus frequency).
FIG. 9B is a diagram of conversion of the frequency spectrum (voltage versus frequency) to a distance spectrum (voltage versus distance).
FIG. 9C is a diagram of peak detection based on distance spectra (voltage versus distance) and calculation of distance values corresponding to the respective peaks.
FIGs. 10A and 10B are each a schematic external view of an optical interferometric range sensor according to one embodiment of the present invention used in a different form.
FIG. 11 is a schematic diagram of an optical interferometric range sensor 100 according to one embodiment of the present invention.
FIGs. 12A and 12B are each a schematic diagram of a sensor head 100 used in the optical interferometric range sensor 100 according to the embodiment of the present invention.
FIGs. 13A and 13B are each a schematic diagram of a sensor head to be identified as a single spot head 131a or a multi-spot head 131b in one specific example.
FIG. 14 is a flowchart showing a light amount adjustment method M100 including identifying the type of sensor head and adjusting the amount of light to correspond to the identified type of sensor head.
FIGs. 15A and 15B are each a schematic diagram of a sensor head including one or more collimating lenses to be identified as the single spot head 131a or the multi-spot head 131b in one specific example.
FIGs. 16A and 16B are each a schematic diagram of a sensor head including an internal component with one or more reflective surfaces to be identified as the single spot head 131a or the multi-spot head 131b in one specific example.
FIG. 17A is a schematic diagram of an optical fiber including a reflective surface to allow identification of the type of sensor head in one specific example.
FIG. 17B is a schematic diagram of an optical fiber including a reflective surface at an end (end face) adjacent to a controller 101 to allow identification of the type of sensor head in one specific example.
FIGs. 18A and 18B are each a schematic diagram of a sensor head to be identified as the single spot head 131a or the multi-spot head 131b based on the number of peaks in a beat signal in one specific example.
FIG. 19 is a flowchart showing a light adjustment method M101 including identifying the type of sensor head based on the number of peaks detected in the beat signal and adjusting the amount of light to correspond to the identified type of sensor head.
FIGs. 20A, 20B, and 20C are diagrams of interferometers that generate interference light using measurement light and reference light in modifications.

DETAILED DESCRIPTION

Embodiments of the present invention will now be described specifically with reference to the accompanying drawings. The embodiments described below are merely illustrative for implementing the present invention and are not to be construed as limiting the invention. To facilitate understanding, the same reference numerals denote the same components in the drawings, and such components will not be described repeatedly.

Overview of Displacement Sensor

An overview of a displacement sensor according to an embodiment of the present disclosure will be described first.

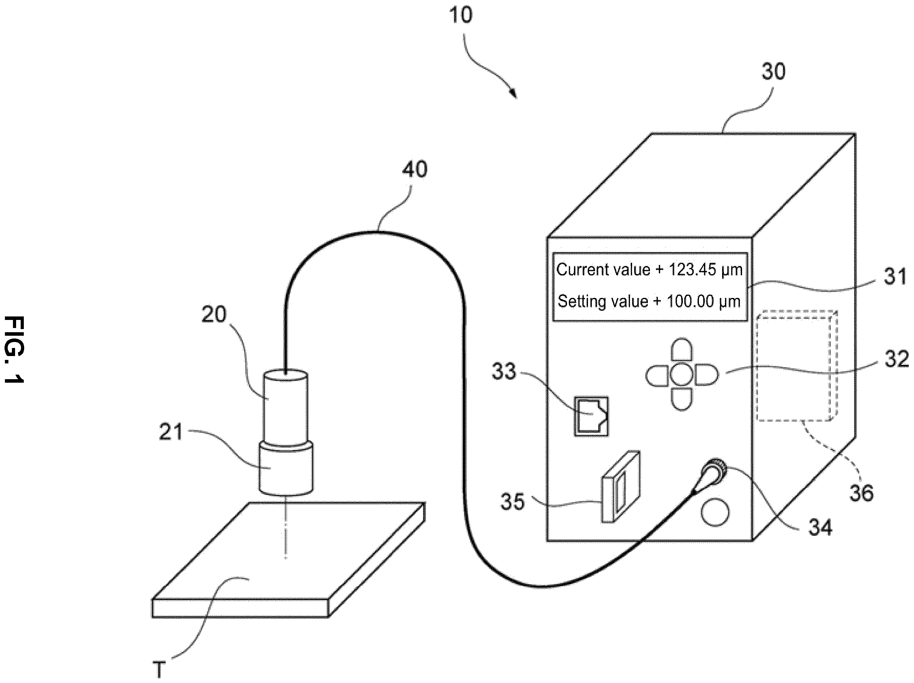

FIG. 1 is a schematic external view of a displacement sensor 10 according to the embodiment of the present disclosure. As shown in FIG. 1, the displacement sensor 10 includes a sensor head 20 and a controller 30 to measure the displacement of a measurement target T (distance to the measurement target T).

The sensor head 20 and the controller 30 are connected with an optical fiber 40. An objective lens 21 is attached to the sensor head 20. The controller 30 includes a display 31, a setting unit 32, an external interface (I/F) 33, an optical fiber connector 34, an external storage 35, and an internal measurement processor 36.

The sensor head 20 irradiates the measurement target T with light output from the controller 30 and receives reflected light from the measurement target T. The sensor head 20 includes a reference surface inside that reflects light output from the controller 30 and received through the optical fiber 40 and causes such light to interfere with the reflected light from the measurement target T described above.

The objective lens 21 attached to the sensor head 20 is detachable. The objective lens 21 is replaceable with another objective lens having a focal length appropriate for the distance between the sensor head 20 and the measurement target T, or is a variable-focus objective lens.

The sensor head 20, the measurement target T, or both may be positioned to have the measurement target T appropriately being within the measurement area of the displacement sensor 10 by irradiating the measurement target T with guide light (visible light).

The optical fiber 40 is connected to the optical fiber connector 34 on the controller 30 and extends to connect the controller 30 and the sensor head 20. The optical fiber 40 thus guides light emitted from the controller 30 to the sensor head 20 and returning light from the sensor head 20 to the controller 30. The optical fiber 40 is detachable from the sensor head 20 and the controller 30. The optical fiber may have any length, thickness, and characteristics.

The display 31 is, for example, a liquid crystal display or an organic electroluminescent (EL) display. The display 31 displays the setting values of the displacement sensor 10, the amount of returning light received from the sensor head 20, and measurement results measured by the displacement sensor 10, such as the displacement of the measurement target T (distance to the measurement target T).

The setting unit 32 receives settings associated with measurement of the measurement target T through user operations performed on mechanical buttons or a touchscreen. All or some of the associated settings may be preset or set through an external connection device (not shown) connected to the external I/F 33. The external connection device may be connected with a wire or wirelessly through a network.

The external I/F 33 includes, for example, Ethernet (registered trademark), Recommended Standard (RS) 232C, and analog output. The external I/F 33 may be connected to an external connection device to allow the associated settings to be input through the external connection device or to output, for example, measurement results measured by the displacement sensor 10 to the external connection device.

The controller 30 may import data stored in the external storage 35 to perform the settings associated with measurement of the measurement target T. The external storage 35 is, for example, an auxiliary storage, such as a universal serial bus (USB) memory, which prestores settings associated with measurement of the measurement target T.

The measurement processor 36 in the controller 30 includes, for example, a wavelength swept light source that emits light with continuously changing wavelengths, a light receiving element that receives returning light from the sensor head 20 to convert the received light to an electric signal, and a signal processing circuit that processes the electric signal. The measurement processor 36 performs various processes using, for example, a controller and a storage to calculate the displacement of the measurement target T (distance to the measurement target T) based on the returning light from the sensor head 20. These processes will be described in detail later.

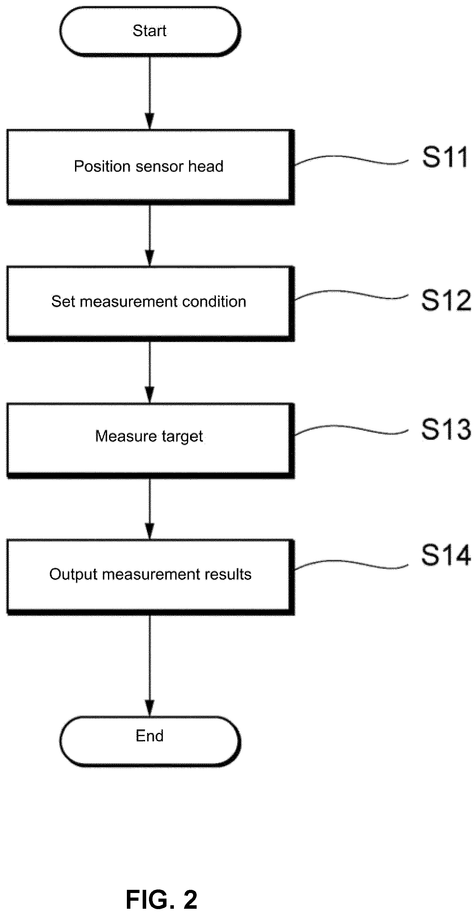

FIG. 2 is a flowchart showing measurement of the measurement target T with the displacement sensor 10 according to the embodiment of the present disclosure. As shown in FIG. 2, this procedure includes steps S11 to S14.

In step S11, the sensor head 20 is positioned. For example, the sensor head 20 irradiates the measurement target T with guide light, which is used as a reference to position the sensor head 20 appropriately.

More specifically, the display 31 in the controller 30 may display the amount of returning light from the sensor head 20. The user may refer to the amount of returning light to adjust, for example, the orientation of the sensor head 20 and the distance (position in height) from the measurement target T. Typically, when the sensor head 20 irradiates the measurement target T perpendicularly (at angles closer to 90 degrees), more light is reflected from the measurement target T, and more returning light is received from the sensor head 20.

The objective lens 21 may be replaced with another objective lens having a focal length appropriate for the distance between the sensor head 20 and the measurement target T.

When settings appropriate for measuring the measurement target T are not possible (e.g., the amount of light appropriate for measurement is not received, or the focal length of the objective lens 21 is inappropriate), a message indicating an error or incomplete settings may be displayed on the display 31 or output to the external connection device for the user.

In step S12, various measurement conditions are set to measure the measurement target T. For example, the user sets unique calibration data (e.g., a function to correct linearity) for the sensor head 20 by operating the setting unit 32 in the controller 30.

Various parameters may also be set. For example, the sampling time, the measurement area, and the threshold for determining whether the measurement result is normal or abnormal are set. The measurement cycle may also be set based on the characteristics of the measurement target T such as the reflectance and the material of the measurement target T. The measurement mode may be set based on the material of the measurement target T.

These measurement conditions and various parameters are set by operating the setting unit 32 in the controller 30, but may also be set through an external connection device or by importing data from the external storage 35.

In step S13, the sensor head 20 positioned in step S11 measures the measurement target T in accordance with the measurement conditions and various parameters set in step S12.

More specifically, in the measurement processor 36 included in the controller 30, the wavelength swept light source emits light, the light receiving element receives returning light from the sensor head 20, and the signal processing circuit performs, for example, frequency analysis, distance conversion, and peak detection to calculate the displacement of the measurement target T (distance to the measurement target T). The measurement will be specifically described in detail later.

In step S14, the results of the measurement performed in step S13 are output. For example, the displacement of the measurement target T (distance to the measurement target T) measured in step S13 and other information are displayed on the display 31 in the controller 30 or output to the external connection device.

The measurement result displayed or output may also include whether the displacement of the measurement target T (distance to the measurement target T) measured in step S13 is within a normal range or is abnormal based on the threshold set in step S12. The measurement conditions, the parameters, and the measurement mode set in step S12 may also be displayed or output together.

Overview of System Including Displacement Sensor

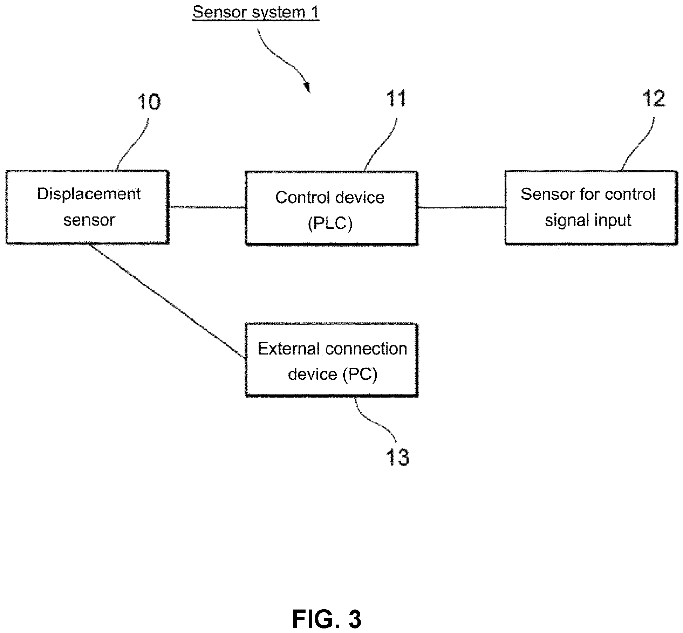

FIG. 3 is a functional block diagram of a sensor system 1 including the displacement sensor 10 according to the embodiment of the present disclosure. As shown in FIG. 3, the sensor system 1 includes the displacement sensor 10, a control device 11, a sensor 12 for control signal input, and an external connection device 13. The displacement sensor 10 is connected to the control device 11 and the external connection device 13 with, for example, a communication cable or an external connection cord (e.g., an external input line, an external output line, or a power line). The control device 11 and the sensor 12 for control signal input are connected with a signal line.

The displacement sensor 10 measures the displacement of the measurement target T (distance to the measurement target T) as described with reference to FIGs. 1 and 2. The displacement sensor 10 may then output the measurement results and other information to the control device 11 and the external connection device 13.

The control device 11 is, for example, a programmable logic controller (PLC), which provides various instructions to the displacement sensor 10 measuring the measurement target T.

For example, the control device 11 may output a measurement time signal to the displacement sensor 10 based on an input signal from the sensor 12 for control signal input connected to the control device 11 or may output, for example, a zero reset command signal (a signal to set the current measurement value to zero) to the displacement sensor 10.

The sensor 12 for control signal input outputs an on-signal or an off-signal to the control device 11 to indicate the time for the displacement sensor 10 to measure the measurement target T. For example, the sensor 12 for control signal input is installed near the production line carrying the measurement target T to output the on- or off-signal to the control device 11 upon detecting the measurement target T moved to a predetermined position.

The external connection device 13 is, for example, a personal computer (PC), which is operable by the user to perform various settings with the displacement sensor 10.

In an example, a measurement mode, an operation mode, a measurement cycle, and the material of the measurement target T are set.

The measurement mode is selectively set to, for example, an internal synchronous measurement mode in which measurement starts periodically in the control device 11 or to an external synchronous measurement mode in which measurement starts in response to an input signal from outside the control device 11.

The operation mode is selectively set to, for example, an in-operation mode in which the measurement target T is actually measured or to an adjustment mode in which the measurement conditions are set for measuring the measurement target T.

The measurement cycle for measuring the measurement target T is set based on the reflectance of the measurement target T. For any measurement target T with low reflectance, a longer measurement cycle may be set as appropriate to allow appropriate measurement of the measurement target T.

For example, a rough surface mode is selected for a measurement target T reflecting light containing a relatively large amount of diffuse reflection component. A specular surface mode is selected for a measurement target T reflecting light containing a relatively large amount of specular reflection component. A standard mode is selected for a measurement target T reflecting light containing about a half diffuse reflection component and a half specular reflection component.

Appropriate mode setting based on the reflectance and the material of the measurement target T allows more accurate measurement of the measurement target T.

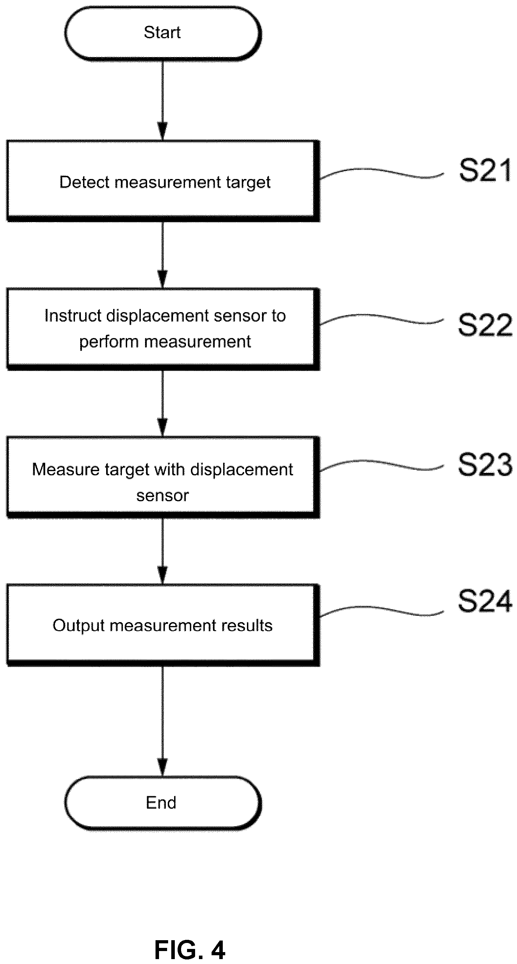

FIG. 4 is a flowchart showing measurement of the measurement target T with the sensor system 1 including the displacement sensor 10 according to the embodiment of the present disclosure. As shown in FIG. 4, this procedure is performed in the external synchronous measurement mode and includes steps S21 to S24.

In step S21, the sensor system 1 detects a measurement target T, which is an object to be measured. More specifically, the sensor 12 for control signal input detects the measurement target T moved to a predetermined position on the production line.

In step S22, the sensor system 1 instructs the displacement sensor 10 to measure the measurement target T detected in step S21. More specifically, the sensor 12 for control signal input outputs an on-signal or an off-signal to the control device 11 to indicate the time to measure the measurement target T detected in step S21. The control device 11 outputs a measurement time signal to the displacement sensor 10 in response to the on- or off-signal to instruct the displacement sensor 10 to measure the measurement target T.

In step S23, the displacement sensor 10 measures the measurement target T. More specifically, the displacement sensor 10 measures the measurement target T in response to the measurement instruction received in step S22.

In step S24, the sensor system 1 outputs measurement results obtained in step S23. More specifically, the displacement sensor 10 causes the display 31 to display the measurement results or outputs the results to, for example, the control device 11 or the external connection device 13 through the external I/F 33.

Although the procedure described above with reference to FIG. 4 is performed in the external synchronous measurement mode in which the measurement target T is measured in response to the sensor 12 for control signal input detecting the measurement target T, the measurement may be performed with a procedure in any mode. For example, in the internal synchronous measurement mode, the processing in steps S21 and S22 may be replaced with generation of a measurement time signal in preset cycles to instruct the displacement sensor 10 to measure the measurement target T.

A basic measurement procedure of the measurement target T with the displacement sensor 10 according to the embodiment of the present disclosure will now be described.

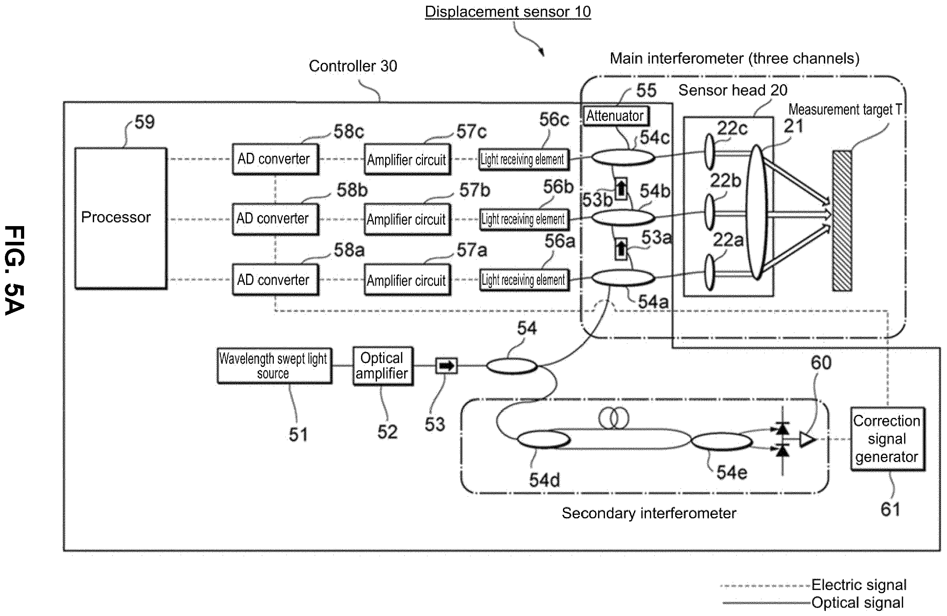

FIG. 5A is a diagram describing a basic measurement procedure of the measurement target T with the displacement sensor 10 according to the embodiment of the present disclosure. As shown in FIG. 5A, the displacement sensor 10 includes the sensor head 20 and the controller 30. The sensor head 20 includes the objective lens 21 and multiple collimating lenses 22a to 22c. The controller 30 includes a wavelength swept light source 51, an optical amplifier 52, multiple isolators 53, 53a, and 53b, multiple optical couplers 54 and 54a to 54e, an attenuator 55, multiple light receiving elements (e.g., photodetectors, or PDs) 56a to 56c, multiple amplifier circuits 57a to 57c, multiple analog-to-digital (AD) converters 58a to 58c, a processor 59, a balance detector 60, and a correction signal generator 61.

The wavelength swept light source 51 emits a laser beam with a swept wavelength. The wavelength swept light source 51 may be, for example, a vertical-cavity surface-emitting laser (VCSEL) modulated with an electric current. Such a wavelength swept light source 51 with a short cavity length is less likely to cause mode hopping and facilitates wavelength changes at low cost.

The optical amplifier 52 amplifies light emitted from the wavelength swept light source 51. The optical amplifier 52 may be, for example, an erbium-doped fiber amplifier (EDFA) for light with 1550 nm.

The isolator 53 is an optical element that transmits incident light in one direction. The isolator 53 may be located immediately downstream from the wavelength swept light source 51 to reduce returning light affecting the measurement as noise.

Light emitted from the wavelength swept light source 51 is amplified by the optical amplifier 52, travels through the isolator 53, and is split by the optical coupler 54 and incident on a main interferometer and a secondary interferometer. For example, the optical coupler 54 may split the light to be incident on the main interferometer and the secondary interferometer at a ratio of 90:10 to 99:1.

The light split and incident on the main interferometer is further split by the first-stage optical coupler 54a into light toward the sensor head 20 and light toward the second-stage optical coupler 54b.

The light split toward the sensor head 20 by the first-stage optical coupler 54a travels across the sensor head 20 from the end of the optical fiber through the collimating lens 22a and the objective lens 21 to the measurement target T. The end (end face) of the optical fiber serves as the reference surface. The light reflected from the reference surface and the light reflected from the measurement target T interfere with each other to form interference light, which returns to the first-stage optical coupler 54a and is received by the light receiving element 56a for conversion to an electric signal.

The light split by the first-stage optical coupler 54a toward the second-stage optical coupler 54b enters the second-stage optical coupler 54b through the isolator 53a, and is further split by the second-stage optical coupler 54b into light toward the sensor head 20 and light toward the third-stage optical coupler 54c. The light directed by the optical coupler 54b to the sensor head 20 travels across the sensor head 20 from the end of the optical fiber through the collimating lens 22b and the objective lens 21 to the measurement target T in the same manner as in the first stage. The end (end face) of the optical fiber serves as the reference surface. The light reflected from the reference surface and the light reflected from the measurement target T interfere with each other to form interference light, which returns to the second-stage optical coupler 54b and is split by the optical coupler 54b into light toward the isolator 53a and light toward the light receiving element 56b. The light directed by the optical coupler 54b to the light receiving element 56b is received by the light receiving element 56b and converted to an electric signal. The isolator 53a transmits light from the optical coupler 54a in the preceding stage to the optical coupler 54b in the subsequent stage, but blocks light from the optical coupler 54b in the subsequent stage to the optical coupler 54a in the preceding stage. The light directed by the optical coupler 54b to the isolator 53a is thus blocked.

The light split toward the third-stage optical coupler 54c by the second-stage optical coupler 54b enters the third-stage optical coupler 54c through the isolator 53b, and is further split by the third-stage optical coupler 54c into light toward the sensor head 20 and light toward the attenuator 55. The light directed by the optical coupler 54c to the sensor head 20 travels across the sensor head 20 from the end of the optical fiber through the collimating lens 22c and the objective lens 21 to the measurement target T in the same manner as in the first and second stages. The end (end face) of the optical fiber serves as the reference surface. The light reflected from the reference surface and the light reflected from the measurement target T interfere with each other to form interference light, which returns to the third-stage optical coupler 54c and is split by the optical coupler 54c into light toward the isolator 53b and light toward the light receiving element 56c. The light directed by the optical coupler 54c to the light receiving element 56c is received by the light receiving element 56c and converted to an electric signal. The isolator 53b transmits light from the optical coupler 54b in the preceding stage to the optical coupler 54c in the subsequent stage, but blocks light from the optical coupler 54c in the subsequent stage to the optical coupler 54b in the preceding stage. The light directed by the optical coupler 54c to the isolator 53b is thus blocked.

The light directed by the third-stage optical coupler 54c in the direction other than to the sensor head 20 is not used in the measurement of the measurement target T. Such light may thus be attenuated by the attenuator 55 such as a terminator to avoid returning back by reflection.

As described above, the main interferometer includes three stages of optical paths (three channels) each with an optical path length difference being twice (round trip) the distance from the end (end face) of the optical fiber connected to the sensor head 20 to the measurement target T, thus generating three beams of interference light corresponding to the respective optical path length differences.

The light receiving elements 56a to 56c receive interference light from the main interferometer as described above and generate electric signals corresponding to the amounts of received light.

The amplifier circuits 57a to 57c amplify the electric signals output from the respective light receiving elements 56a to 56c.

The AD converters 58a to 58c receive the electric signals amplified by the respective amplifier circuits 57a to 57c and convert the electric signals from analog signals to digital signals (AD conversion). The AD converters 58a to 58c perform AD conversion based on a correction signal from the correction signal generator 61 in the secondary interferometer.

The secondary interferometer obtains an interference signal in the secondary interferometer and generates the correction signal, referred to as a K clock, to correct nonlinearity in the swept wavelength of the wavelength swept light source 51.

More specifically, the light split by the optical coupler 54 and incident on the secondary interferometer is further split by the optical coupler 54d. The optical paths for the resultant light beams can have different lengths with the use of, for example, optical fibers having different lengths extending between the optical coupler 54d and the optical coupler 54e, thus outputting interference light corresponding to the optical path length difference from the optical coupler 54e. The balance detector 60 receives the interference light from the optical coupler 54e and amplifies the optical signal while removing noise as the difference from the signal having a phase inverted from the phase of the interference light to convert the optical signal to an electric signal.

Each of the optical coupler 54d and the optical coupler 54e may split the light at a ratio of 50:50.

The correction signal generator 61 determines, based on the electric signal from the balance detector 60, the nonlinearity in the swept wavelength of the wavelength swept light source 51 and generates a K clock corresponding to the nonlinearity for output to the AD converters 58a to 58c.

The nonlinearity in the swept wavelength of the wavelength swept light source 51 indicates that the waves of the analog signals input into the AD converters 58a to 58c in the main interferometer occur at unequal intervals. The AD converters 58a to 58c perform AD conversion (sampling) by correcting the sampling time based on the K clock described above to cause the waves at equal intervals.

As described above, the K clock is a correction signal for sampling the analog signal in the main interferometer. The K clock is thus to be generated to have a higher frequency than the analog signal in the main interferometer. More specifically, the length difference between the optical paths extending between the optical coupler 54d and the optical coupler 54e in the secondary interferometer may be designed longer than the optical path length difference corresponding to the distance between the end (end face) of the optical fiber and the measurement target T in the main interferometer, or the frequency of the K clock may be multiplied (e.g., by eight times) to a higher frequency by the correction signal generator 61.

The processor 59 obtains digital signals converted from analog signals by the AD converter 58a to 58c with the nonlinearity being corrected, and calculates the displacement of the measurement target T (distance to the measurement target T) based on the digital signals. More specifically, the processor 59 converts the digital signals to a frequency spectrum using a fast Fourier transform (FFT) and analyzes the resultant frequencies to calculate the distance. The processing performed by the processor 59 will be described in detail later.

The processor 59, which is to perform high speed processing, is often implemented with an integrated circuit such as a field-programmable gate array (FPGA).

In the present embodiment, the main interferometer includes three stages of optical paths (multiple channels), with the sensor head 20 emitting measurement light along the light paths to the measurement target T. The interference light (returning light) obtained through each light path is used to measure, for example, the distance to the measurement target T. The main interferometer may include any number of channels other than three channels, such as one, two, or four or more channels.

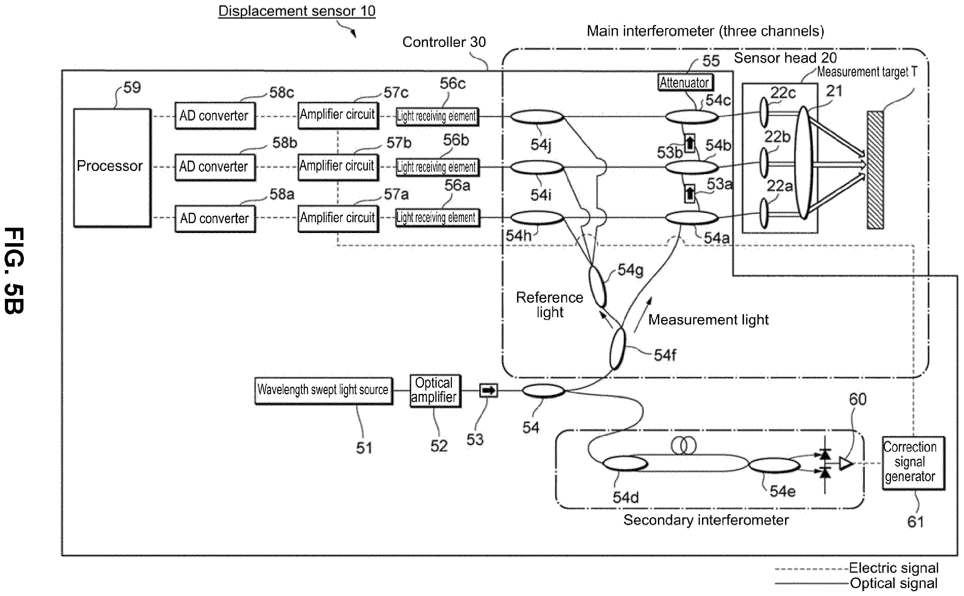

FIG. 5B is a diagram describing another basic measurement procedure of the measurement target T with the displacement sensor 10 according to the embodiment of the present disclosure. As shown in FIG. 5B, the displacement sensor 10 includes the sensor head 20 and the controller 30. The sensor head 20 includes the objective lens 21 and the multiple collimating lenses 22a to 22c. The controller 30 includes the wavelength swept light source 51, the optical amplifier 52, the multiple isolators 53, 53a, and 53b, multiple optical couplers 54 and 54a to 54j, the attenuator 55, the multiple light receiving elements (e.g., PDs) 56a to 56c, the multiple amplifier circuits 57a to 57c, the multiple AD converters 58a to 58c, the processor 59, the balance detector 60, and the correction signal generator 61. The displacement sensor 10 shown in FIG. 5B differs from the displacement sensor 10 shown in FIG. 5A mainly in including the optical couplers 54f to 54j. The basic procedure of this structure will be described in detail by focusing on its differences from the structure shown in FIG. 5A.

Light emitted from the wavelength swept light source 51 is amplified by the optical amplifier 52, travels through the isolator 53, and is split by the optical coupler 54 into light toward the main interferometer and light toward the secondary interferometer. The light split toward the main interferometer is further split by the optical coupler 54f to serve as measurement light and reference light.

As described with reference to FIG. 5A, the measurement light is directed by the first-stage optical coupler 54a to travel through the collimating lens 22a and the objective lens 21 to the measurement target T and is reflected from the measurement target T. In the structure in FIG. 5A, the light reflected from the end (end face) of the optical fiber serving as the reference surface and the light reflected from the measurement target T interfere with each other to form interference light. In the structure in FIG. 5B, the reference surface to reflect light is eliminated. In other words, in the structure in FIG. 5B, no light is reflected from the reference surface unlike in FIG. 5A, and thus the measurement light reflected from the measurement target T returns to the first-stage optical coupler 54a.

Similarly, the light directed by the first-stage optical coupler 54a to the second-stage optical coupler 54b enters the second-stage optical coupler 54b, which directs a portion of light to travel through the collimating lens 22b and the objective lens 21 to the measurement target T. The light is then reflected from the measurement target T to return to the second-stage optical coupler 54b. The light directed by the second-stage optical coupler 54b to the third-stage optical coupler 54c enters the third-stage optical coupler 54c, which directs a portion of the light to travel through the collimating lens 22c and the objective lens 21 to the measurement target T. The light is then reflected from the measurement target T to return to the third-stage optical coupler 54c.

The reference light resulting from the split performed by the optical coupler 54f is further split by the optical coupler 54g to be incident on the optical couplers 54h, 54i, and 54j.

In the optical coupler 54h, the measurement light reflected from the measurement target T and output from the optical coupler 54a and the reference light output from the optical coupler 54g interfere with each other to form interference light, which is received by the light receiving element 56a and converted to an electric signal. In other words, the light split by the optical coupler 54f to serve as the measurement light and the reference light forms interference light corresponding to the length difference between the optical path for the measurement light (from the optical coupler 54f through the optical coupler 54a, the collimating lens 22a, and the objective lens 21 to the measurement target T and back to the optical coupler 54h) and the optical path for the reference light (from the optical coupler 54f through the optical coupler 54g to the optical coupler 54h). The interference light is received by the light receiving element 56a and converted to an electric signal.

Similarly, in the optical coupler 54i, interference light is formed to correspond to the length difference between the optical path for the measurement light (from the optical coupler 54f through the optical couplers 54a and 54b, the collimating lens 22b, and the objective lens 21 to the measurement target T and back to the optical coupler 54i) and the optical path for the reference light (from the optical coupler 54f through the optical coupler 54g to the optical coupler 54i). The interference light is received by the light receiving element 56b and converted to an electric signal.

In the optical coupler 54j, interference light is formed to correspond to the length difference between the optical path for the measurement light (from the optical coupler 54f through the optical couplers 54a, 54b, and 54c, the collimating lens 22c, and the objective lens 21 to the measurement target T, and back to the optical coupler 54j) and the optical path for the reference light (from the optical coupler 54f through the optical coupler 54g to the optical coupler 54j). The interference light is received by the light receiving element 56c and converted to an electric signal. The light receiving elements 56a to 56c may be, for example, balance PDs.

As described above, the main interferometer includes three stages of optical paths (three channels) to generate three beams of interference light each corresponding to the length difference between the optical path for the measurement light reflected from the measurement target T and input into the optical coupler 54h, 54i, or 54j and the optical path for the reference light input through the optical couplers 54f and 54g into the optical coupler 54h, 54i, or 54j.

The length difference between the optical path for the measurement light and the optical path for the reference light may be set to differ in each of the three channels with, for example, the optical path length differing between the optical coupler 54g and each of the optical couplers 54h, 54i, and 54j.

The interference light obtained through each of the optical paths (multiple channels) is used to measure, according to the invention, the distance to the measurement target T.

Sensor Head Structure

The structure of the sensor head used in the displacement sensor 10 will now be described.

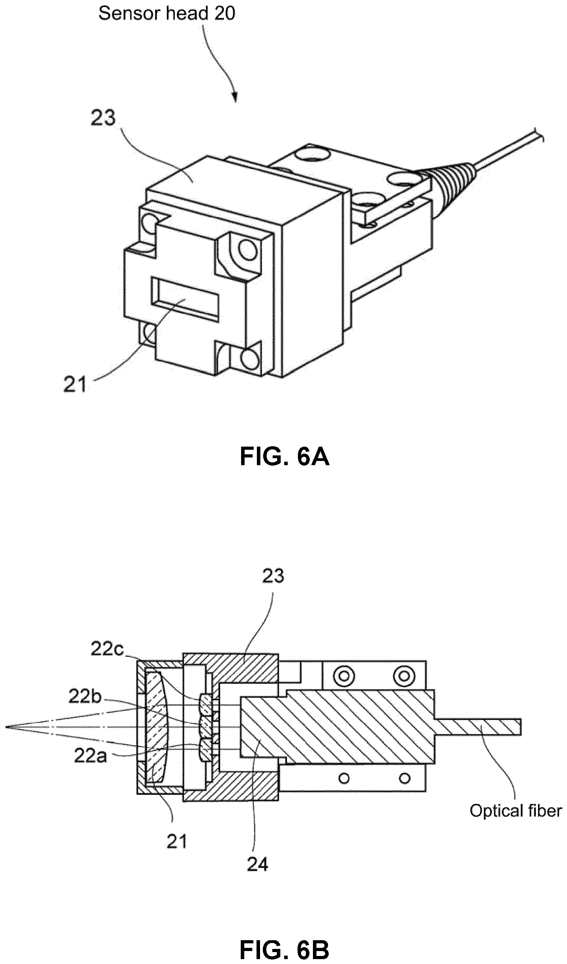

FIG. 6A is a schematic perspective view of the sensor head 20. FIG. 6B is a schematic view of the sensor head showing the internal structure.

As shown in FIG. 6A, the sensor head 20 includes a lens holder 23 holding the objective lens 21 and collimating lenses. For example, the size of the lens holder 23 is about 20 mm on one side surrounding the objective lens 21 and about 40 mm in length in the optical axis direction.

As shown in FIG. 6B, the lens holder 23 holds one objective lens 21 and three collimating lenses 22a to 22c. Light from the optical fiber is guided through an optical fiber array 24 to the three collimating lenses 22a to 22c. The light through the three collimating lenses 22a to 22c reaches the measurement target T through the objective lens 21.

The optical fiber, the collimating lenses 22a to 22c, and the optical fiber array 24 are held by the lens holder 23 together with the objective lens 21, thus together serving as the sensor head 20.

The lens holder 23 in the sensor head 20 may be formed from a metal (e.g., A2017), which has high strength and is machinable with high precision.

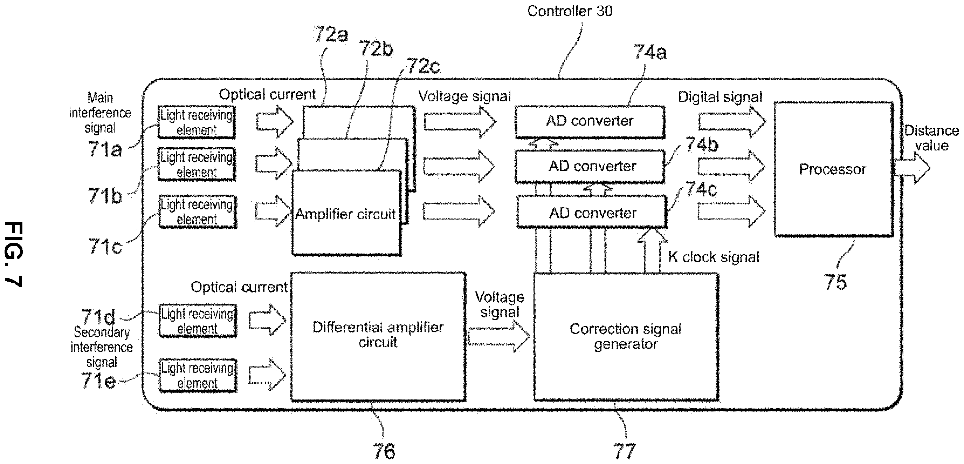

FIG. 7 is a block diagram of the controller 30 showing signal processing in the controller 30. As shown in FIG. 7, the controller 30 includes multiple light receiving elements 71a to 71e, multiple amplifier circuits 72a to 72c, multiple AD converters 74a to 74c, a processor 75, a differential amplifier circuit 76, and a correction signal generator 77.

As shown in FIG. 5A, the controller 30 splits, with the optical coupler 54, light emitted from the wavelength swept light source 51 into light to be incident on the main interferometer and light to be incident on the secondary interferometer and processes a main interference signal obtained from the main interferometer and a secondary interference signal obtained from the secondary interferometer to calculate a distance value to the measurement target T.

The multiple light receiving elements 71a to 71c correspond to the light receiving elements 56a to 56c shown in FIG. 5A. The light receiving elements 71a to 71c receive main interference signals from the main interferometer to output the signals to the respective amplifier circuits 72a to 72c as current signals.

The amplifier circuits 72a to 72c convert the current signals to voltage signals (I-V conversion) and amplify the resultant signals.

The AD converters 74a to 74c correspond to the AD converters 58a to 58c shown in FIG. 5A. The AD converters 74a to 74c convert the voltage signals to digital signals (AD conversion) based on the K clock from the correction signal generator 77 (described later).

The processor 75 corresponds to the processor 59 shown in FIG. 5A. The processor 75 converts the digital signals from the AD converters 74a to 74c to a frequency spectrum using an FFT and analyzes the frequencies to calculate the distance value to the measurement target T.

The light receiving elements 71d and 71e and the differential amplifier circuit 76 correspond to the balance detector 60 shown in FIG. 5A. The light receiving elements 71d and 71e each receive interference light from the secondary interferometer. One of the light receiving elements 71d and 71e outputs an interference signal with the phase being inverted. The differential amplifier circuit 76 amplifies the interference light while removing noise as the difference between the two signals and converts the signal to a voltage signal.

The correction signal generator 77 corresponds to the correction signal generator 61 shown in FIG. 5A. The correction signal generator 77 binarizes the voltage signal with a comparator, generates a K clock, and outputs the K clock to the AD converters 74a to 74c. The K clock is to be generated with a higher frequency than the frequency of the analog signal in the main interferometer. The frequency of the K clock may by multiplied (e.g., by eight times) to a higher frequency by the correction signal generator 77.

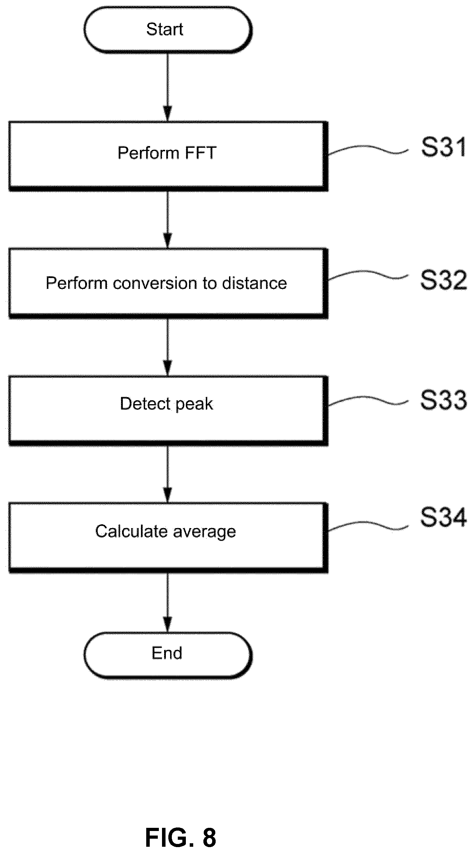

FIG. 8 is a flowchart showing a method for calculating the distance to the measurement target T with the processor 59 in the controller 30. As shown in FIG. 8, the method includes steps S31 to S34.

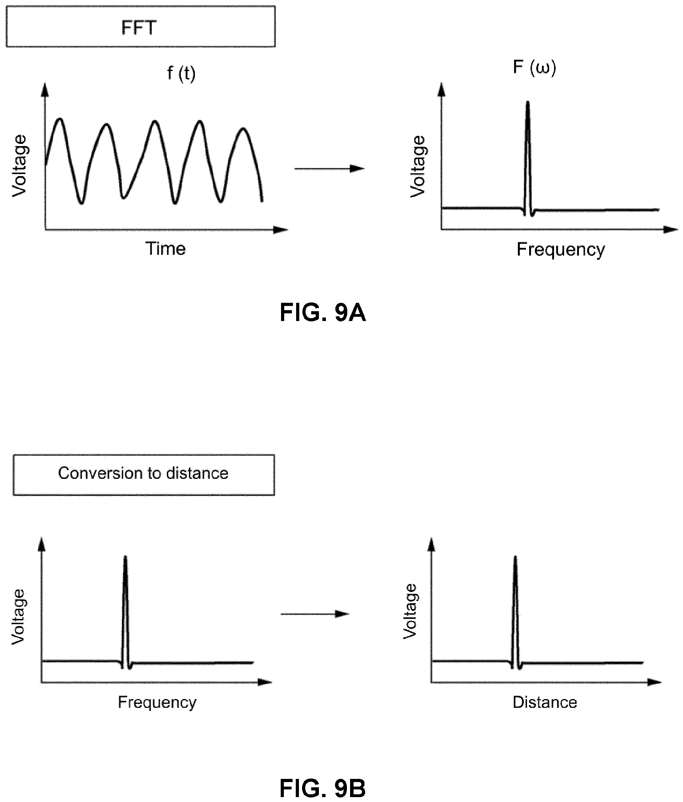

In step S31, the processor 59 converts the waveform signal (voltage versus time) to a frequency spectrum (voltage versus frequency) using the FFT below. FIG. 9A is a diagram of conversion of the waveform signal (voltage versus time) to a frequency spectrum (voltage versus frequency).

$$\sum_{t=0}^{N-1} f(t) exp\left(-\mathrm{i}\frac{2\pi\omega t}{N}\right) = F(\omega)$$

In the above formula, N is the number of data points.

In step S32, the processor 59 converts the frequency spectrum (voltage versus frequency) to a distance spectrum (voltage versus distance). FIG. 9B is a diagram of conversion of the frequency spectrum (voltage versus frequency) to a distance spectrum (voltage versus distance).

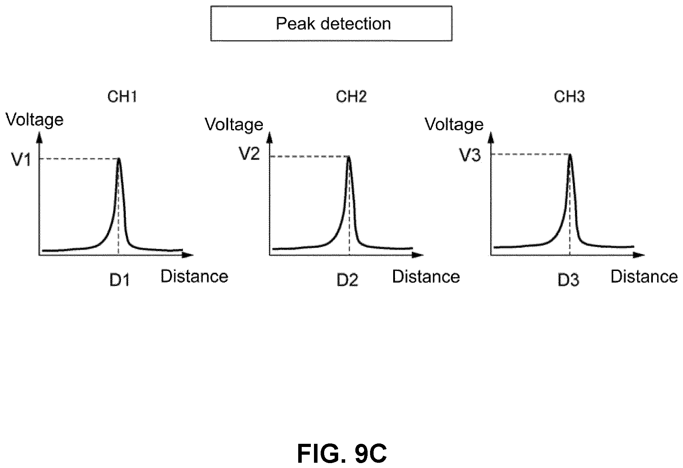

In step S33, the processor 59 calculates the distance value corresponding to a peak based on the distance spectrum (voltage versus distance). FIG. 9C is a diagram of peak detection based on distance spectra (voltage versus distance) and calculation of distance values corresponding to the respective peaks. In FIG. 9C, peaks are detected in three channels based on the respective spectra (voltage versus distance) to calculate the distance values corresponding to the respective peaks.

In step S34, the processor 59 calculates an average of the distance values calculated in step S33. More specifically, the processor 59 calculates an average of the distance values calculated from the respective peaks detected based on the spectra (voltage versus distance) in the three channels in step S33. The processor 59 outputs the average of the values as the distance to the measurement target T.

In step S34, the processor 59 may calculate an average of distance values with a signal-to-noise ratio (SNR) greater than or equal to a threshold selected from the distance values calculated in step S33. For example, among the peaks detected in all of the three channels based on the respective spectra (voltage versus distance), any distance value calculated based on a spectrum with a SNR less than the threshold is determined to be less reliable and is not used.

Specific embodiments of the present disclosure will now be described in detail focusing on distinctive components, functions, and characteristics. An optical interferometric range sensor described below corresponds to the displacement sensor 10 described with reference to FIGs. 1 to 9C. All or some of the basic components, functions, and characteristics of the optical interferometric range sensor are the same as the components, functions, and characteristics of the displacement sensor 10 described with reference to FIGs. 1 to 9C.

Embodiments

Structure of Optical Interferometric Range Sensor

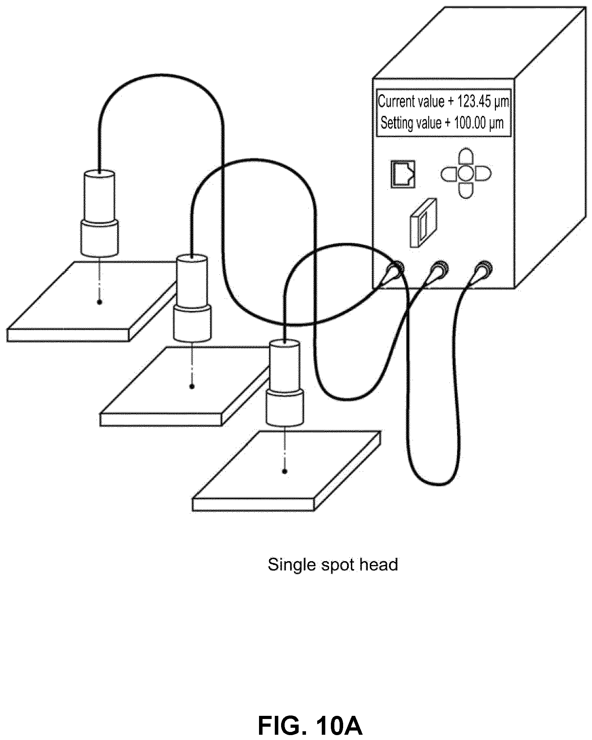

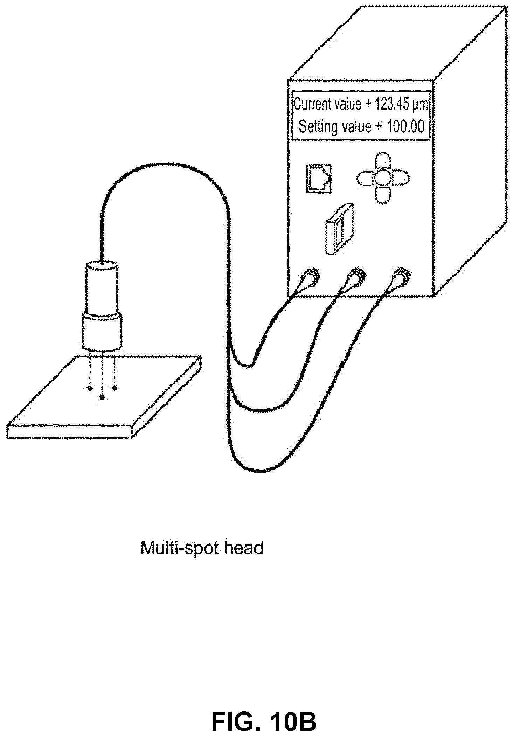

FIGs. 10A and 10B are each a schematic external view of an optical interferometric range sensor according to one embodiment of the present invention used in a different form. The optical interferometric range sensor shown in FIG. 10A measures the distances to measurement targets using three single spot heads. The optical interferometric range sensor shown in FIG. 10B measures the distance to a measurement target using a single multi-spot head for three spots.

In these examples, the number of spots is three, but not limited to this. For example, two or four or more single spot heads may be used, or a single multi-spot head for two or four or more spots may be used. Appropriate measurement conditions are to be set based on whether the optical interferometric range sensor includes multiple single spot heads or a single multi-spot head. Adjusting, for example, the amount of light as appropriate for the type of sensor head will be described in detail later.

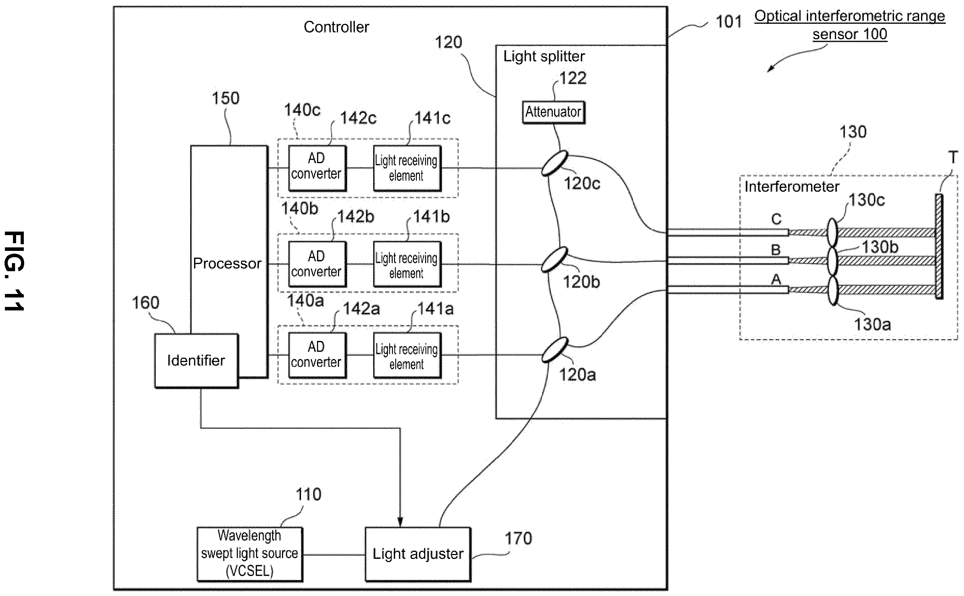

FIG. 11 is a schematic diagram of an optical interferometric range sensor 100 according to one embodiment of the present invention. As shown in FIG. 11, the optical interferometric range sensor 100 includes a wavelength swept light source 110, a light splitter 120, an interferometer 130, light receivers 140a to 140c, a processor 150, an identifier 160, and a light adjuster 170.

The wavelength swept light source 110, the light splitter 120, the light receivers 140a to 140c, and the processor 150 are included in a controller 101. The identifier 160 may be a function implemented by the processor 150 or by, for example, a separate controller.

The wavelength swept light source 110 is directly connected to the light splitter 120 or indirectly connected to the light splitter 120 with other components (e.g., the optical amplifier 52, the isolator 53, and the optical coupler 54). The wavelength swept light source 110 emits light with continuously changing wavelengths. In other words, the wavelength of the light emitted from the wavelength swept light source 110 changes continuously.

The light emitted from the wavelength swept light source 110 is transmitted to the interferometer 130 through the light splitter 120 and optical fibers.

The light splitter 120 includes, for example, optical couplers or circulators. The light splitter 120 splits light emitted from the wavelength swept light source 110, transmits the split light to the interferometer 130 to be incident on multiple spots, and guides returning light from the interferometer 130 to the light receivers 140a to 140c. In this example, the light splitter 120 includes optical couplers 120a to 120c in three stages connected in series with one another to split transmitted light toward optical paths A to C to be incident on three spots. The light splitter 120 may include the optical couplers 120a to 120c each being, for example, a $2 \times 2$ optical coupler. Such a light splitter 120 may include an attenuator 122 to attenuate light spilt to another path from the optical coupler 120c in the subsequent stage to reduce returning light to the optical coupler 120c.

The interferometer 130 includes the three single spot heads shown in FIG. 10A or the single multi-spot head (three spots) shown in FIG. 10B as a sensor head. Although the sensor head includes lenses 130a to 130c in this specific example, the sensor head may include collimating lenses or an objective lens, or may include both of these lenses.

In the interferometer 130, a portion of light transmitted through the optical path A reaches the measurement target T through the lens 130a included in the sensor head and is reflected from the measurement target T as measurement light. The measurement light reflected from the measurement target T then returns to the optical path A through the lens 130a included in the sensor head. Another portion of the light transmitted through the optical path A is reflected from the reference surface at the end of the optical fiber as reference light. The measurement light and the reference light interfere with each other to form interference light corresponding to the length difference between the optical path for the measurement light and the optical path for the reference light. The interference light is output from the interferometer 130.

Similarly, a portion of light transmitted through the optical path B reaches the measurement target T through the lens 130b included in the sensor head and is reflected from the measurement target T as measurement light, and a portion of light transmitted through the optical path C reaches the measurement target T through the lens 130c included in the sensor head and is reflected from the measurement target T as measurement light. The measurement light reflected from the measurement target T then returns to the optical path B through the lens 130b included in the sensor head, and to the optical path C through the lens 130c included in the sensor head. Another portion of the light transmitted through the optical paths B is reflected from the reference surface at the end of the optical fiber as reference light. Another portion of the light transmitted through the optical paths C is reflected from the reference surface at the end of the optical fiber as reference light. The measurement light and the reference light interfere with each other to form interference light corresponding to the length difference between the optical path for the measurement light and the optical path for the reference light. The interference light is output from the interferometer 130.

The interference light corresponding to each of the optical paths A to C output from the interferometer 130 is received by each of the light receivers 140a to 140c through the light splitter 120 (optical couplers 120a to 120c) and converted to electric signals.

More specifically, the light receiver 140a includes a light receiving element 141a and an AD converter 142a, the light receiver 140b includes a light receiving element 141b and an AD converter 142b, and the light receiver 140c includes a light receiving element 141c and an AD converter 142c. The light receiving elements 141a to 141c are, for example, photodetectors, and receive light output from the light splitter 120 (optical couplers 120a to 120c) and convert the light to electric signals each corresponding to the received amount of light. The AD converters 142a to 142c convert the electric signals from analog signals to digital signals.

The processor 150 calculates the distance from the sensor head to the measurement target T based on the digital signals resulting from conversion performed by the light receivers 140a to 140c. For example, the processor 150 includes an integrated circuit such as an FPGA. The processor 150 converts each input digital signal to a frequency spectrum using an FFT and calculates the distance to the measurement target T based on the frequency spectra.

The distance from the sensor head to the measurement target T is typically, but not limited to, the distance from the distal end of the sensor head to the measurement target T. The processor 150 calculates this distance. For example, the processor 150 may calculate, as the distance from the sensor head to the measurement target T, the distance from the end of the optical fiber connected to the sensor head to the measurement target T, the distance from the objective lens in the sensor head to the measurement target T, or the distance from a reference position preset within the sensor head to the measurement target T.

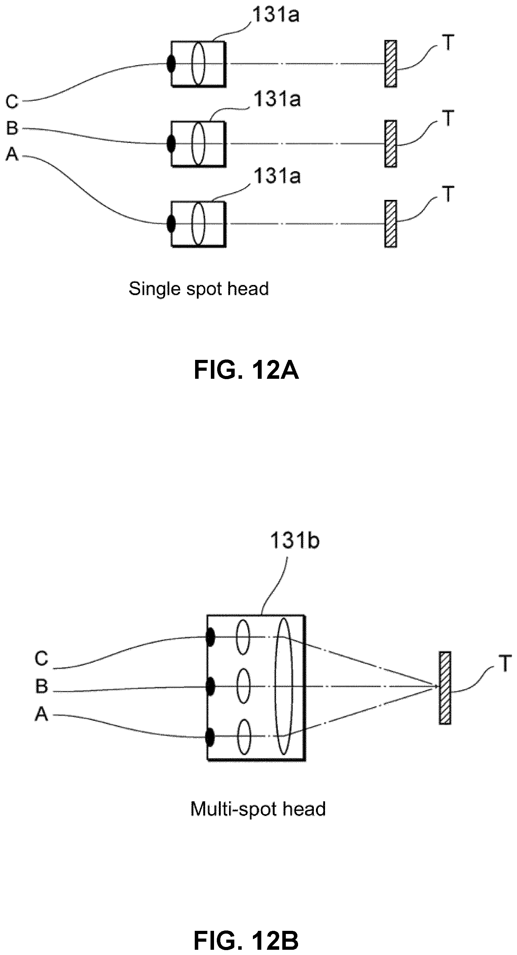

The type of sensor head included in the interferometer 130 will now be described. FIGs. 12A and 12B are each a schematic diagram of a sensor head used in the optical interferometric range sensor 100 according to one embodiment of the present invention. In FIG. 12A, three single spot heads 131a are used for the optical paths A to C. In FIG. 12B, a single multi-spot head 131b for three spots is used for the optical paths A to C. The optical interferometric range sensor 100 includes either type of sensor head.

The identifier 160 identifies the type of sensor head based on a beat signal generated by the interferometer 130. For example, the identifier 160 identifies, based on a beat signal generated by the interferometer 130, the single spot heads 131a shown in FIG. 12A or the multi-spot head 131b shown in FIG. 12B as the sensor head being used in the optical interferometric range sensor 100. The beat signal generated by the interferometer 130 is generated by optical signals traveling on different optical path lengths interfering with each other, which will be described in specific examples together with the identification method described later.

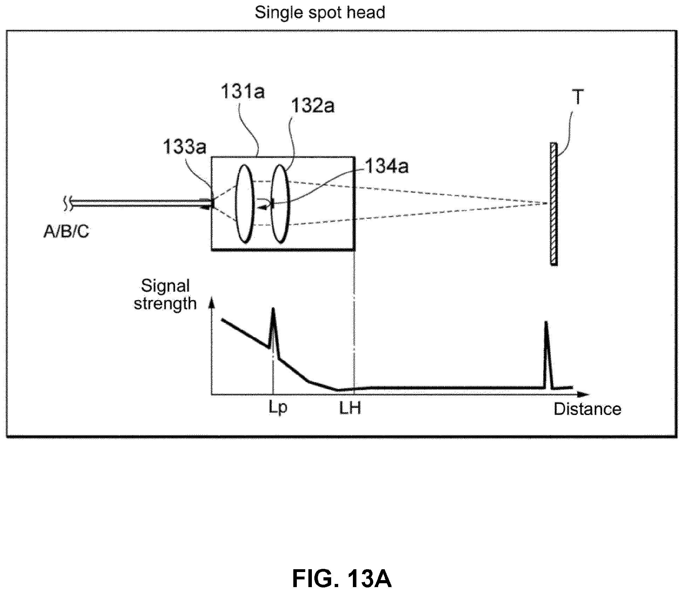

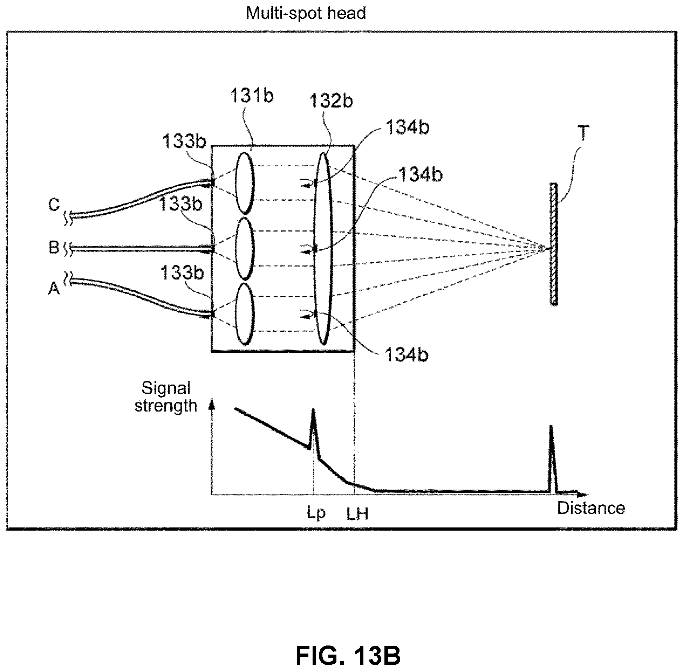

FIGs. 13A and 13B are each a schematic diagram of a sensor head to be identified as a single spot head 131a or a multi-spot head 131b in one specific example. As shown in FIG. 13A, a portion of the light input into the single spot head 131a through the optical fiber reaches the measurement target T as measurement light and is reflected from the measurement target T. Another portion of the light input into the single spot head 131a is reflected from a reference surface 133a at the end of the optical fiber as reference light. The measurement light and the reference light form interference light, allowing detection of the distance from the single spot head 131a to the measurement target T as a signal peak.

Still another portion of the light input into the single spot head 131a through the optical fiber is reflected from a reflective surface 134a on the objective lens 132a. The reflected light and the reference light described above form a beat signal (interference light), allowing detection of a position Lp of the objective lens 132a (specifically, the reflective surface 134a) in the single spot head 131a (specifically, in the area from a distal end position LH of the sensor head 131a toward the reference surface 133a) as a signal peak.

The reflective surface 134a on the objective lens 132a may be on either surface of the objective lens 132a. The reflective surface 134a may be a partial reflective coating applied to the objective lens 132a, or may be a portion using Fresnel reflection with, for example, low reflectance (about 5% or less).

Similarly, in the structure in FIG. 13B, the objective lens 132b in the multi-spot head 131b (specifically, in the area from a distal end position LH of the sensor head 131b toward reference surfaces 133b) includes reflective surfaces 134b to reflect a portion of the light input into the multi-spot head 131b through the optical fibers. The reflected light and the reference light described above form a beat signal (interference light), allowing detection of a position Lp of the objective lens 132b (specifically, the reflective surfaces 134b) in the multi-spot head 131b as a signal peak.

In the manner described above, a beat signal is generated by the interferometer 130 including the single spot heads 131a or the multi-spot head 131b. The beat signal is received by the light receivers 140a to 140c, allowing detection of the signal peak as shown in FIGs. 13A and 13B.

The identifier 160 can identify the type of sensor head based on the peak of the beat signal with, for example, the objective lens 132a and the objective lens 132b at different positions respectively in the single spot head 131a shown in FIG. 13A and the multi-spot head 131b shown in FIG. 13B.

In FIG. 13A, one single spot head 131a is described as an example. However, as shown in FIG. 12A, with three similar single spot heads 131a being used, a similar position Lp is detected based on the beat signal received by each of the light receivers 140a to 140c.

In FIG. 13B, the objective lens 132b includes the reflective surfaces 134b to cause a beat signal to be generated for each of the optical paths A to C in a single multi-spot head 131b. This allows a similar position Lp to be detected based on the beat signal received by each of the light receivers 140a to 140c, but the structure is not limited to this example. For example, the objective lens 132b may include the reflective surfaces 134b to cause a beat signal to be generated for one of the optical paths A to C, allowing a position Lp to be detected based on the beat signal received by one of the light receivers 140a to 140c.

The light adjuster 170 adjusts the amount of light emitted from the sensor head to a measurement target T based on the type of sensor head identified by the identifier 160. For example, the light adjuster 170 may control the wavelength swept light source 110 to adjust the amount of light emitted from the wavelength swept light source 110, or may adjust the amount of light emitted from the wavelength swept light source 110 with an amplifier, an attenuator, or both.

More specifically, when the single multi-spot head 131b is used to irradiate, with laser beams, multiple spots adjacent to each other in a predetermined area, the light adjuster 170 adjusts the amount of light incident on each of the multiple spots in the predetermined area to satisfy the safety standards for laser beams. More specifically, the amount of a laser beam incident on a single spot is to be smaller.

When the multiple single spot heads 131a are used to irradiate, with laser beams, areas spaced from each other, the light adjuster 170 adjusts the amount of light emitted from each single spot head to allow measurement with high accuracy. More specifically, the amount of a laser beam incident on a single spot is to be larger. Method for Adjusting Light Amount to Correspond to Type of Sensor Head

A method for adjusting the amount of light to correspond to the type of sensor head will now be described.

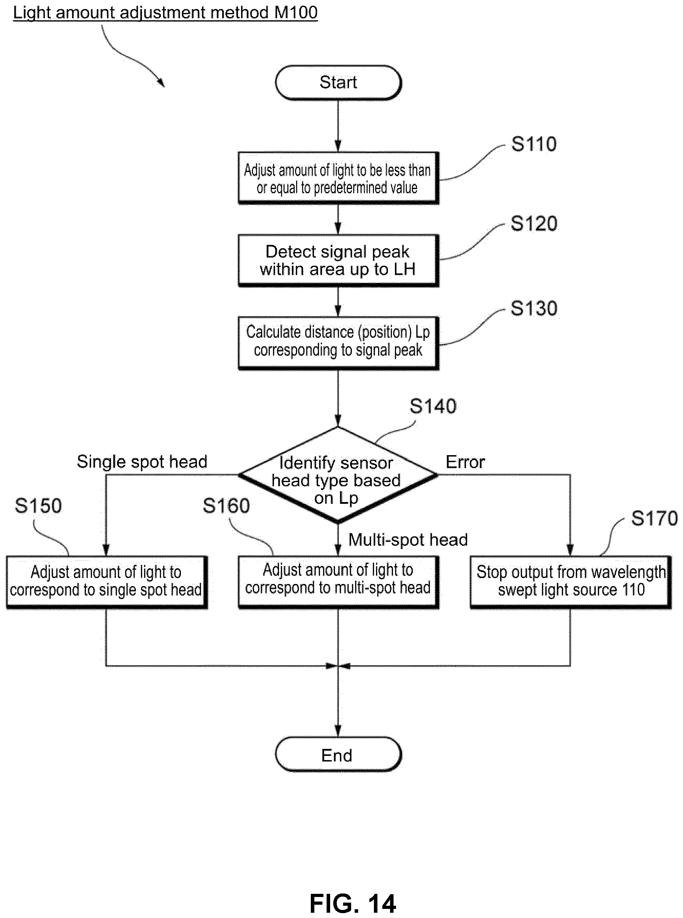

FIG. 14 is a flowchart showing a light amount adjustment method M100 including identifying the type of sensor head and adjusting the amount of light to correspond to the identified type of sensor head. As shown in FIG. 14, the light amount adjustment method M100 includes steps S110 to S170. Each step is performed by the processor included in the optical interferometric range sensor 100.

In step S110, the light adjuster 170 adjusts the amount of light incident on a measurement target T. For example, when the identifier 160 is identifying the type of sensor head, the type of sensor head remains unknown. Thus, the light adjuster 170 adjusts the amount of light to satisfy the safety standards for laser beams. More specifically, the light adjuster 170 sets the amount of light to the amount for the sensor head identified to be a multi-spot head by the identifier 160, for a situation in which a multi-spot head irradiates, with laser beams, multiple spots adjacent to each other in a predetermined area.

More specifically, the light adjuster 170 adjusts the amount of light incident on each of the multiple spots to be smaller. When single spot heads are used to irradiate, with laser beams, areas spaced from each other, measurement targets T are irradiated with small amounts of light, thus satisfying the safety standards for laser beams sufficiently. The distance to a measurement target T is not measured in this step. Thus, any decrease in the measurement accuracy due to the small amounts of light is not discussed.

In step S120, the identifier 160 detects any signal peak based on the interference light received by the light receivers 140a to 140c within the area up to the distal end position LH of the sensor head. Each signal peak is detected based on the interference light received by each of the light receivers 140a to 140c.

In step S130, the identifier 160 calculates a distance Lp corresponding to each signal peak detected in step S120.

In step S140, the identifier 160 identifies the sensor head as a sensor head including the single spot head 131a or the multi-spot head 131b based on the distance (position) Lp calculated in step S130.

In an example, for the single spot head 131a, the objective lens 132a (reflective surface 134a) is pre-positioned to achieve Lp = L1. For the multi-spot head 131b, the objective lens 132b (reflective surface 134b) is pre-positioned to achieve Lp = L2. The distance Lp calculated in step S130 is determined to be closer to (corresponds to) the distance L1 or the distance L2 with comparison of $| Lp - L1 |$ and $|Lp - L2|$.

When determining that the distance Lp corresponds to the distance L1 in step S140 (single spot head in step S140), the identifier 160 identifies the single spot head 131a as the sensor head being used. The light adjuster 170 adjusts the amount of light to correspond to the single spot head 131a in step S150.

When determining that the distance Lp corresponds to the distance L2 in step S140 (multi-spot head in step S140), the identifier 160 identifies the multi-spot head 131b as the sensor head being used. The light adjuster 170 adjusts the amount of light to correspond to the multi-spot head 131b in step S160.

When determining that the distance Lp corresponds to none of the distances L1 and L2 in step S140 (error in step S140), the identifier 160 cannot identify the type of sensor head. The identifier 160 outputs an error, and the light adjuster 170 causes the wavelength swept light source 110 to stop outputting light in step S170.

Specific examples of the error include the distance Lp, which is calculated in step S130 for each signal peak detected based on the interference light received by each of the light receivers 140a to 140c in step S 120, being out of a range determined to correspond to the distance L1 or L2, and the distance Lp corresponding to both the distances L1 and L2. In this case, a sensor head different from an expected sensor head may possibly be connected, both a single spot head and a multi-spot head may possibly be connected, or no sensor head may possibly be connected. The identifier 160 thus cannot identify the type of sensor head (error). For safety in laser beam irradiation, the light adjuster 170 may cause the wavelength swept light source 110 to stop outputting light and may also output an error message corresponding to the error estimated based on the calculated distance Lp.

The light amount adjustment method M100 may be performed upon setting measurement conditions for measurement of the measurement target T, or for example, before start of the measurement or upon each measurement of the measurement target T.

As described above, the optical interferometric range sensor 100 according to the first embodiment of the present invention includes the identifier 160 that identifies the type of sensor head as the single spot head or the multi-spot head based on the beat signal generated by the interferometer 130. The light adjuster 170 adjusts the amount of light to correspond to the type of sensor head identified by the identifier 160. This allows the amount of light to be adjusted as appropriate for the sensor head, thus allowing the measurement distance to the measurement target T to be measured with high accuracy while satisfying the safety standards for laser beam irradiation. This reduces the user work of, for example, identifying the type of sensor head and manually setting the corresponding amount of light in each measurement operation.

The single spot head 131a described with reference to FIG. 13A includes a collimating lens between the end of the optical fiber and the objective lens 132a, and the multi-spot 131b described with reference to FIG. 13B includes collimating lenses between the ends of the optical fibers and the objective lens 132b. This structure collimates light incident on the objective lens 132a or 132b, thus allowing more flexibility in the position of the reflective surface 134a on the objective lens 132a or the positions of the reflective surfaces 134b on the objective lens 132b.

The single spot head 131a and the multi-spot head 131b may have any structures, other than those shown in FIGs. 13A and 13B, that can identify the type of sensor head based on the beat signal generated by the interferometer 130. Such structures that allow identification of the type of sensor head will now be described.

Specific Examples of Structures for Identifying Type of Sensor Head

First Specific Example

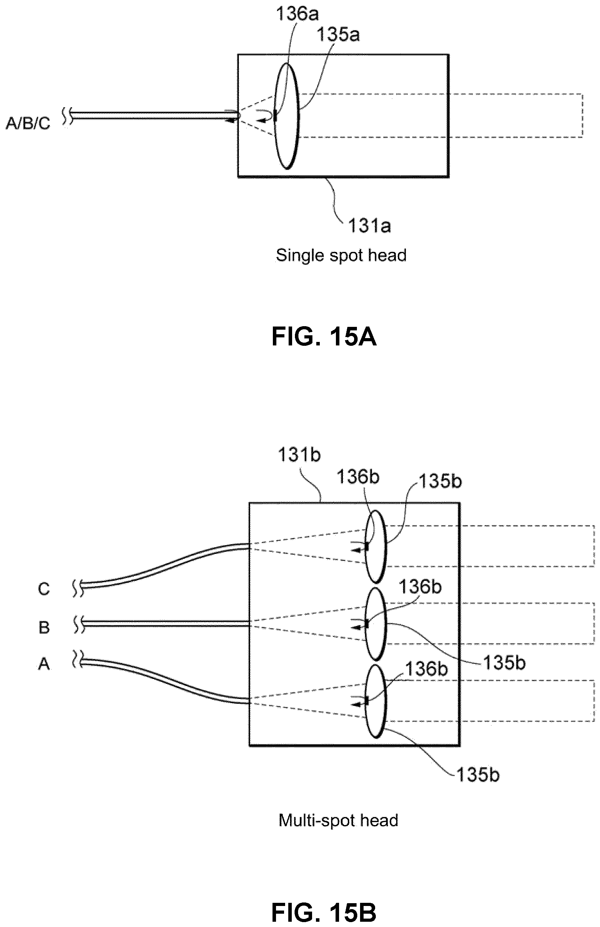

FIGs. 15A and 15B are each a schematic diagram of a sensor head including one or more collimating lenses to be identified as the single spot head 131a or the multi-spot head 131b in one specific example. As shown in FIGs. 15A and 15B, the single spot head 131a includes a collimating lens 135a without an objective lens, and the multi-spot head 131b includes collimating lenses 135b without an objective lens.

The collimating lens 135a includes a reflective surface 136a to reflect a portion of the light input into the single spot head 131a through the optical fiber. The collimating lenses 135b each include a reflective surface 136b to reflect a portion of the light input into the multi-spot head 131b through the optical fibers.

The collimating lens 135a and the collimating lenses 135b are at different positions in the respective single spot head 131a and multi-spot head 131b to allow the identifier 160 to identify the type of sensor head based on the peak of the beat signal.

The single spot head 131a and the multi-spot head 131b described with reference to FIGs. 15A and 15B each have a simple structure without an objective lens, thus facilitating detection of the peak of the beat signal.

Second Specific Example

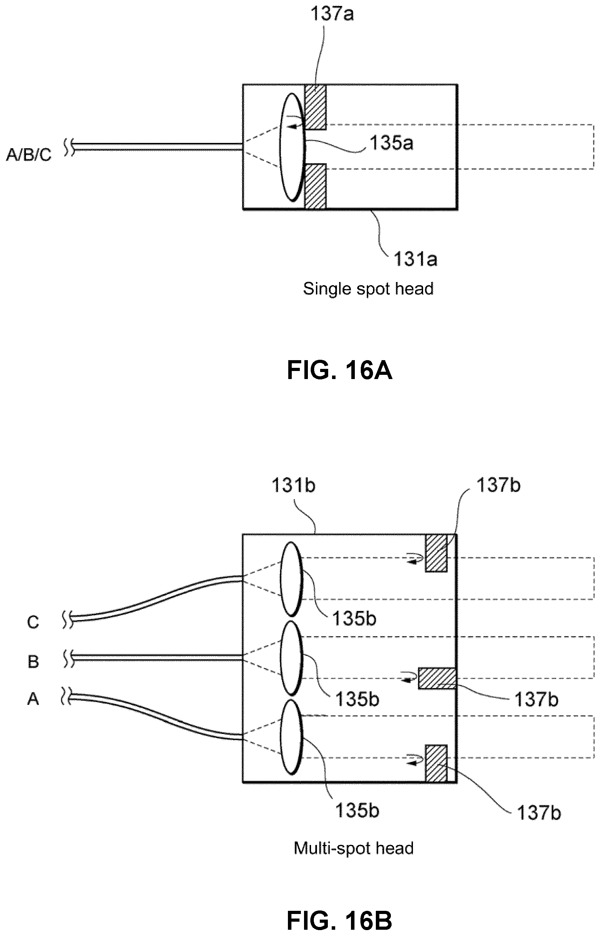

FIGs. 16A and 16B are each a schematic diagram of a sensor head including an internal component with one or more reflective surfaces to be identified as the single spot head 131a or the multi-spot head 131b in one specific example. As shown in FIGs. 16A and 16B, the single spot head 131a includes a predetermined component 137a inside the housing, and the multi-spot head 131b includes predetermined components 137b inside the housing.

The predetermined component 137a reflects, within the housing of the single spot head 131a, a portion of the light input into the single spot head 131a through the optical fiber. The predetermined components 137b reflect, within the housing of the multi-spot head 131b, a portion of the light input into the multi-spot head 131b through the optical fibers.

The predetermined component 137a and the predetermined components 137b are at different positions in the respective single spot head 131a and multi-spot head 131b to allow the identifier 160 to identify the type of sensor head based on the peak of the beat signal.

The single spot head 131a and the multi-spot head 131b described with reference to FIGs. 16A and 16B each eliminate a reflective surface located on a collimating lens or an objective lens, facilitating detection of the peak of the beat signal with the predetermined component 137a or the predetermined components 137b positioned to reflect a portion of the light input into the single spot head 131a or the multi-spot head 131b.

The predetermined components 137a and 137b may each be a portion of a component of the single spot head 131a or the multi-spot head 131b, or may be a separate component for generating the peak of the beat signal.

Third Specific Example

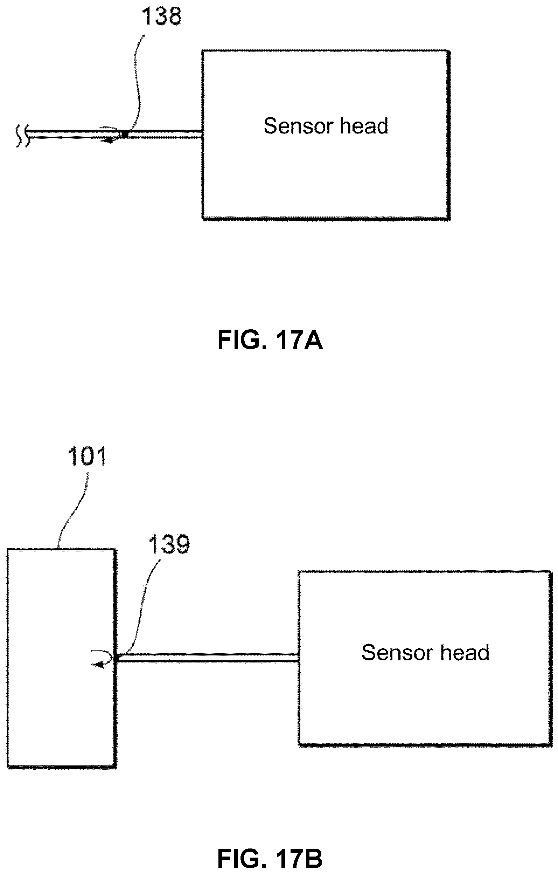

FIG. 17A is a schematic diagram of an optical fiber including a reflective surface to allow identification of the type of sensor head in one specific example. As shown in FIG. 17A, a reflective surface 138 is located inside the optical fiber that guides light to the sensor head, instead of inside the sensor head. More specifically, the reflective surface 138 may be a partial reflective coating applied to a joint of optical fibers.

For example, an optical fiber connected to a single spot head 131a and an optical fiber connected to a multi-spot head 131b may include reflective surfaces 138 at different positions. This allows the identifier 160 to identify the type of sensor head based on the peak of the beat signal.

For a Fizeau interferometer, the end (end face) of the optical fiber is used as the position at which the optical path difference is zero. The peak of the beat signal thus occurs, along the return path, in an area toward the distal end of the sensor head from the position at which the optical path difference is zero.

FIG. 17B is a schematic diagram of an optical fiber including a reflective surface at an end (end face) adjacent to a controller 101 to allow identification of the type of sensor head in one specific example. As shown in FIG. 17B, a reflective surface 139 is located at, instead of inside the sensor head, the end (end face) of the optical fiber adjacent to the controller 101 that guides light to the sensor head. More specifically, the reflective surface 139 may be a partial reflective coating applied to the end (end face) of the optical fiber adjacent to the controller 101.

For a Fizeau interferometer, the end (end face) of the optical fiber is used as the position at which the optical path difference is zero. The peak of the beat signal thus occurs, along the return path, in an area toward the distal end of the sensor head offset from the position at which the optical path difference is zero by the optical path length difference.

Using such peak occurrence, an optical fiber connected to a single spot head 131a and an optical fiber connected to a multi-spot head 131b may be designed to have different lengths (optical path length) to allow the identifier 160 to identify the type of sensor head based on the peak of the beat signal.

As described above, one or more reflective surfaces are located inside the sensor head including one or more collimating lenses, the objective lens, and other components, or located inside or on an end face of the optical fiber to generate a beat signal in the interferometer 130. A single spot head 131a and a multi-spot head 131b may be designed to allow detection of different peaks in the beat signals to allow the identifier 160 to identify the type of sensor head based on the peak of the beat signal.

For the structure to detect different peaks in the beat signals, the structures described with reference to FIGs. 13A and 13B and 15A to 17B may be combined. For example, for a single spot head 131a being used, the predetermined component 137a is placed inside the single spot head 131a (FIG. 16A). For a multi-spot head 131b being used, the reflective surface 138 is located inside the optical fiber (FIG. 17A).

Fourth Specific Example

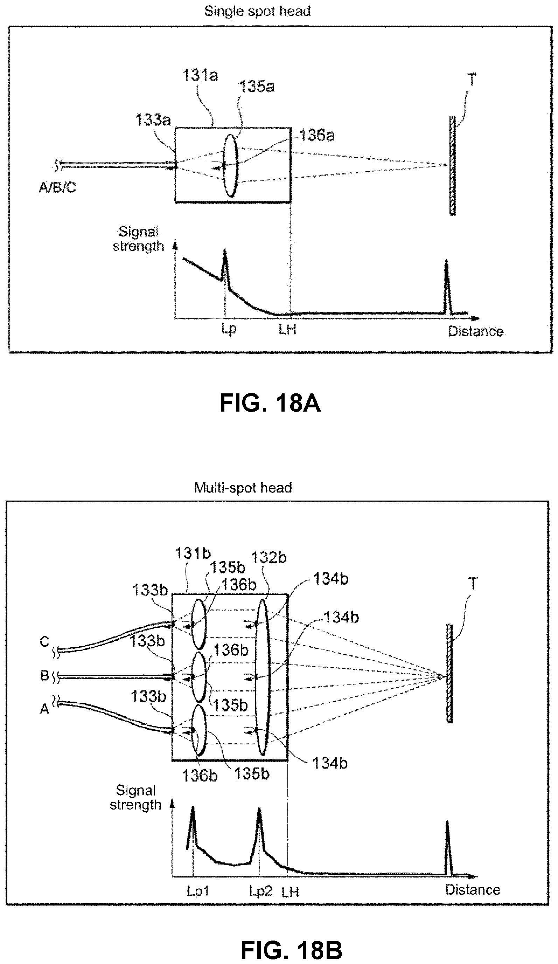

FIGs. 18A and 18B are each a schematic diagram of a sensor head to be identified as the single spot head 131a or the multi-spot head 131b based on the number of peaks in a beat signal in one specific example. As shown in FIGs. 18A and 18B, the single spot head 131a and the multi-spot head 131b have different structures. The type of sensor head is identified based on the number of peaks, instead of the frequency (position and distance) at the peak of the beat signal generated by the interferometer 130.

More specifically, as shown in FIG. 18A, the single spot head 131a includes a collimating lens 135a without including an objective lens. A portion of the light input into the single spot head 131a through the optical fiber is reflected from a reflective surface 136a on the collimating lens 135a. The reflected light then forms a beat signal (interference light) with the reference light reflected from a reference surface 133a at the end of the optical fiber. This allows detection of a position Lp of the collimating lens 135a (specifically, the reflective surface 136a) as a signal peak within the sensor head 131a (specifically, in the area from a distal end position LH of the single spot head 131a toward the reference surface 133a).

As shown in FIG. 18B, the multi-spot head 131b includes collimating lenses 135b and an objective lens 132b. A portion of the light input into the multi-spot head 131b through the optical fibers is reflected from reflective surfaces 136b on the collimating lenses 135b and reflective surfaces 134b on the objective lens 132b. Each of the light reflected from the reflective surfaces 136b and the light reflected from the reflective surfaces 134b forms a beat signal (interference light) with the reference light reflected from reference surfaces 133b at the ends of the optical fibers. This allows detection of a position Lp1 of the collimating lenses 135b (specifically, the reflective surfaces 136b) and a position Lp2 of the objective lens 132b (specifically, the reflective surfaces 134b) as signal peaks within the multi-spot head 131b (specifically, in the area from the distal end position LH of the sensor head 131b toward the reference surfaces 133b).

As described above, the single spot head 131a includes the collimating lens 135a, and the multi-spot head 131b includes the collimating lenses 135b and the objective lens 132b. The identifier 160 can identify the type of sensor head based on the number of peaks detected in the beat signal.

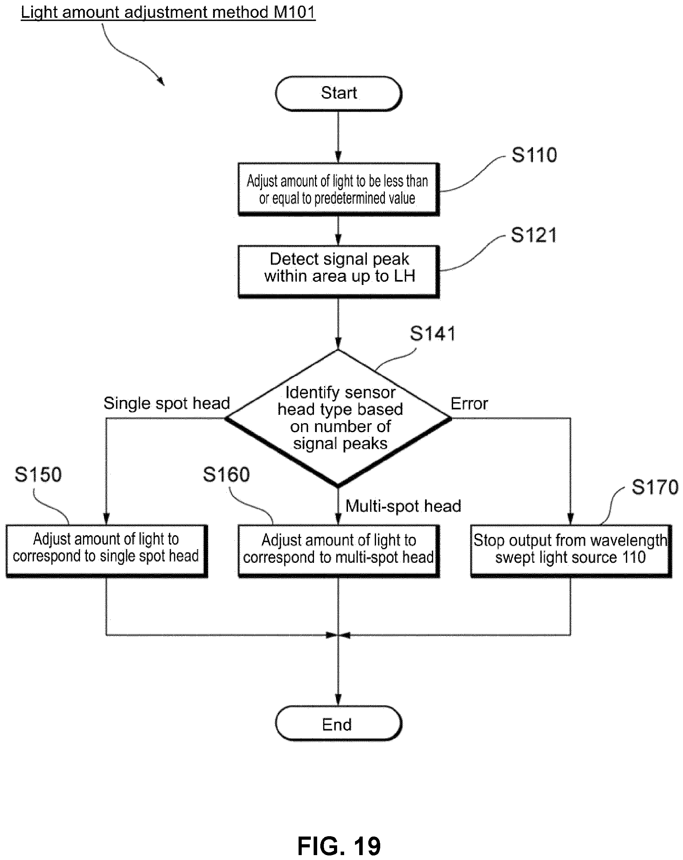

FIG. 19 is a flowchart showing a light adjustment method M101 including identifying the type of sensor head based on the number of peaks detected in the beat signal and adjusting the amount of light to correspond to the identified type of sensor head. As shown in FIG. 19, the light adjustment method M101 includes steps S110, S121, S141, and S150 to S170. Each step is performed by the processor included in the optical interferometric range sensor 100.

In step S110, the light adjuster 170 adjusts the amount of light incident on a measurement target T. For example, the light adjuster 170 adjusts the amount of light to satisfy the safety standards for laser beams for a situation in which a multi-spot head irradiates, with laser beams, multiple spots adjacent to each other in a predetermined area.

In step S121, the identifier 160 detects any signal peak based on the interference light received by the light receivers 140a to 140c within the area up to the distal end position LH of the sensor head. For example, the identifier 160 may detect any signal peak having a signal strength of a predetermined value or greater.

In step S141, the identifier 160 identifies the sensor head as a sensor head including the single spot head 131a or the multi-spot head 131b based on the number of signal peaks detected in step S121.

In an example, for the single spot head 131a, the collimating lens 135a is pre-positioned to cause one signal peak (as in, for example, FIG. 18A). For the multi-spot head 131b, the collimating lenses 135b and the objective lens 132b are pre-positioned to cause two signal peaks (as in, for example, FIG. 18B). In this step, the determination may be performed as to whether the number of signal peaks detected in step S121 is one or two.

When determining that the number of signal peaks is one in step S141 (single spot head in step S141), the identifier 160 identifies the single spot head 131a as the sensor head being used. The light adjuster 170 adjusts the amount of light to correspond to the single spot head 131a in step S150.

When determining that the number of signal peaks is two in step S141 (multi-spot head in step S141), the identifier 160 identifies the multi-spot head 131b as the sensor head being used. The light adjuster 170 adjusts the amount of light to correspond to the multi-spot head 131b in step S160.

When determining that the number of signal peaks corresponds to none of one and two in step S141 (error in step S141), the identifier 160 cannot identify the type of sensor head. The identifier 160 outputs an error, and the light adjuster 170 causes the wavelength swept light source 110 to stop outputting light in step S170.

Specific examples of the error include no signal peaks with a signal strength greater than or equal to a predetermined value being detected based on the interference light received by the light receivers 140a to 140c in step S121, and three or more signal peaks being detected. In this case, a sensor head different from an expected sensor head may possibly be connected, both a single spot head and a multi-spot head may possibly be connected, or no sensor head may possibly be connected. The identifier 160 thus cannot identify the type of sensor head (error). For safety in laser beam irradiation, the light adjuster 170 may cause the wavelength swept light source 110 to stop outputting light and may also output an error message corresponding to the error estimated based on the detected number of signal peaks.

Modifications of Interferometer

In the embodiment described above, the optical interferometric range sensor 100 includes the interferometer 130 being a Fizeau interferometer that generates reference light using the end of the optical fiber as a reference surface. The interferometer is not limited to the Fizeau interferometer.

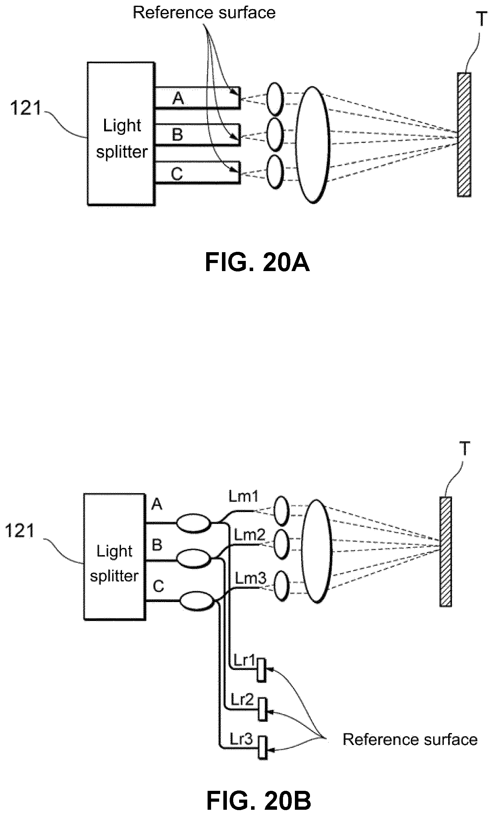

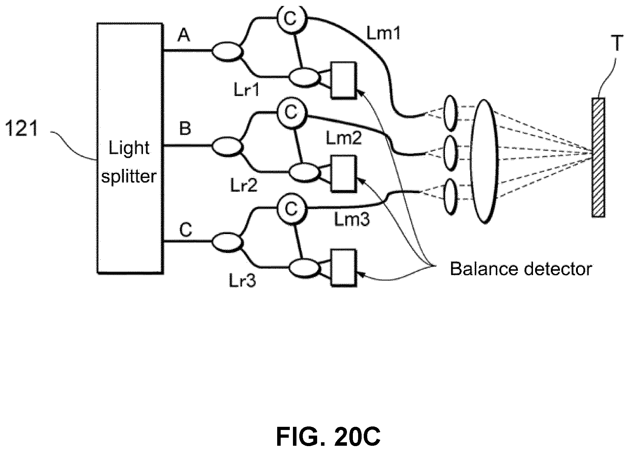

FIGs. 20A, 20B, and 20C are diagrams of interferometers that generate interference light using measurement light and reference light in modifications. In FIG. 20A, a light splitter 121 splits light on each of optical paths A to C into reference light that uses the end of the optical fiber as a reference surface and measurement light emitted from the sensor head and then reaching and reflected from a measurement target T. Interference light occurs based on the difference in optical path lengths between the reference light and the measurement light. This structure includes the same interferometer as the interferometer 130 (Fizeau interferometer) in the optical interferometric range sensor 100 according to the embodiments described above. The reference surface may reflect light due to the difference in refractive index between the optical fiber and air (Fresnel reflection). The end of the optical fiber may be coated with a reflective film, or may be coated with a non-reflective film and receive a reflective surface such as a lens surface separately.

In FIG. 20B, the light splitter 121 splits light on the optical paths A to C into measurement light to be guided along measurement paths Lm1 to Lm3 to the measurement target T and reference light to be guided along reference optical paths Lr1 to Lr3. The reference optical paths Lr1 to Lr3 each include a reference surface at its end (Michelson interferometer). The reference surface may be an end of an optical fiber coated with a reflective film, or may be an end of an optical fiber coated with a non-reflective film and receiving, for example, a mirror separately. This structure generates interference light on the optical path A with the length difference between the measurement optical path Lm1 and the reference optical path Lr1, interference light on the optical path B with the length difference between the measurement optical path Lm2 and the reference optical path Lr2, and interference light on the optical path C with the length difference between the measurement optical path Lm3 and the reference optical path Lr3.

In FIG. 20C, the light splitter 121 splits light on the optical paths A to C into measurement light to be guided along measurement optical paths Lm1 to Lm3 to the measurement target T and reference light to be guided along reference optical paths Lr1 to Lr3. The reference optical paths Lr1 to L3 each include a balance detector (Mach-Zehnder interferometer). This structure generates interference light on the optical path A with the length difference between the measurement optical path Lm1 and the reference optical path Lr1, interference light on the optical path B with the length difference between the measurement optical path Lm2 and the reference optical path Lr2, and interference light on the optical path C with the length difference between the measurement optical path Lm3 and the reference optical path Lr3.

As described above, the interferometer is not limited to the Fizeau interferometer described in the embodiment, and may be, for example, a Michelson or Mach-Zehnder interferometer, or any other interferometer that can generate interference light by setting the optical path length difference between the measurement light and the reference light. These or other interferometers may be combined.

The above embodiments intend to facilitate understanding of the present invention and do not limit the present invention. The elements in the embodiments and their positions, materials, conditions, shapes, sizes, or other parameters are not limited to those illustrated above but may be changed as appropriate. The components in different embodiments may be partly combined or interchanged.

REFERENCE SIGNS LIST

1 sensor system
10 displacement sensor
11 control device
12 sensor for control signal input
13 external connection device
20 sensor head
21 objective lens
22a to 22c collimating lens
23 lens holder
24 optical fiber array
30 controller
31 display
32 setting unit
33 external interface (I/F)
34 optical fiber connector
35 external storage
36 measurement processor
40 optical fiber
51 wavelength swept light source
52 optical amplifier
53, 53a, 53b isolator
54, 54a to 54e optical coupler
55 attenuator
56a to 56c light receiving element
58a to 58c AD converter
59 processor
60 balance detector
61 correction signal generator
71a to 71e light receiving element
72a to 72c amplifier circuit
74a to 74c AD converter
75 processor
76 differential amplifier circuit
77 correction signal generator
100 optical interferometric range sensor
101 controller
110 wavelength swept light source
120, 121light splitter
120a to 120c optical coupler
122 attenuator
130 interferometer
130a to 130c lens
131a single spot head
131b multi-spot head
132a, 132b objective lens
133a, 133b reference surface
134a, 134b, 136a, 136b, 138, 139 reflective surface

135a, 135b collimating lens
137a, 137b predetermined component
140a to 140c light receiver
141a to 141c light receiving element
142a to 142c AD converter
150 processor
160 identifier
170 light adjuster
T measurement target
Lm measurement optical path
Lr reference optical path

**Claims**

1.  An optical interferometric range sensor (10; 100), comprising:

    a light source (51; 110) configured to emit light with a changing wavelength;
    a light splitter (54a to 54c; 120; 121) configured to split the light emitted from the light source (51; 110) into a plurality of beams to be incident on a plurality of spots;
    an interferometer (130) configured to generate, for each of the plurality of beams of the split light incident on a corresponding spot of the plurality of spots, interference light based on measurement light and reference light, the measurement light being light emitted from a sensor head (20; 131a, 131b) to a measurement target (T) and reflected from the measurement target (T), the reference light being light traveling on an optical path at least partially different from an optical path of the measurement light;
    a light receiver (56a to 56c, 58a to 58c, 71a to 71c, 74a to 74c; 140a to 140c) configured to receive the interference light from the interferometer (130) to convert the interference light to an electric signal;
    a processor (59, 75; 150) configured to calculate a distance from the sensor head (20; 131a, 131b) to the measurement target (T) based on the electric signal resulting from conversion performed by the light receiver (56a to 56c, 58a to 58c, 71a to 71c, 74a to 74c; 140a to 140c);
    an identifier (160) configured to identify the sensor head (20; 131a, 131b) based on a beat signal generated by the interferometer (130); and
    a light adjuster (170) configured to adjust an amount of light to be emitted from the sensor head (20; 131a, 131b) to the measurement target (T) based on the sensor head (20; 131a, 131b) identified by the identifier (160), wherein the beat signal results from a portion of the light emitted from the light source (51; 110) and received by the interferometer (130) being reflected from a component (137a, 137b) of the interferometer (130) including a reflective surface.

2.  The optical interferometric range sensor (10; 100) according to claim 1, wherein the sensor head (20; 131a, 131b) includes a single spot head (131a) or a multi-spot head (131b).

3.  The optical interferometric range sensor (10; 100) according to claim 1 or claim 2, wherein the light adjuster (170) adjusts an amount of light to be transmitted to the light splitter (54a to 54c; 120; 121) to be less than or equal to a predetermined value when the identifier (160) identifies the sensor head (20; 131a, 131b).

4.  The optical interferometric range sensor (10; 100) according to claim 3, wherein the predetermined value is an amount of light adjusted for the sensor head (20; 131a, 131b) identified as a multi-spot (131b) head by the identifier (160).

5.  The optical interferometric range sensor (10; 100) according to any one of claims 1 to 4, wherein the identifier (160) identifies the sensor head (20; 131a, 131b) based on at least one of a peak frequency of the beat signal or the number of peaks in the beat signal.

6.  The optical interferometric range sensor (10; 100) according to any one of claims 1 to 5, wherein the reflective surface is located inside the sensor head (20; 131a, 131b).

7.  The optical interferometric range sensor (10; 100) according to claim 6, wherein the reflective surface is located on an objective lens (21; 132a, 132b) included in the sensor head (20; 131a, 131b).

8. The optical interferometric range sensor (10; 100) according to claim 6 or claim 7, wherein
the reflective surface is located on a collimating lens (22a to 22c; 135a, 135b) included in the sensor head (20; 131a, 131b).

9. The optical interferometric range sensor (10; 100) according to any one of claims 1 to 8, wherein
the reflective surface is located inside an optical fiber (40) configured to guide the light emitted from the light source (51; 110) to the sensor head (20; 131a, 131b).

**Patentansprüche**

1. Optischer interferometrischer Entfernungssensor (10; 100), umfassend:

   eine Lichtquelle (51; 110), die eingerichtet ist, Licht mit einer sich ändernden Wellenlänge zu emittieren;
   einen Lichtteiler (54a bis 54c; 120; 121), der eingerichtet ist, das von der Lichtquelle (51; 110) emittierte Licht in mehrere Strahlen zu teilen, die auf mehrere Punkte einfallen;
   ein Interferometer (130), das eingerichtet ist, für jeden der mehreren Strahlen des geteilten Lichts, das auf einen entsprechenden Punkt der mehreren Punkte einfällt, Interferenzlicht basierend auf Messlicht und Referenzlicht zu erzeugen, wobei das Messlicht Licht ist, das von einem Sensorkopf (20; 131a, 131b) zu einem Messziel (T) emittiert und von dem Messziel (T) reflektiert wird, wobei das Referenzlicht Licht ist, das sich auf einem optischen Pfad bewegt, der sich zumindest teilweise von einem optischen Pfad des Messlichts unterscheidet;
   einen Lichtempfänger (56a bis 56c, 58a bis 58c, 71a bis 71c, 74a bis 74c; 140a bis 140c), der eingerichtet ist, das Interferenzlicht von dem Interferometer (130) zu empfangen, und das Interferenzlicht in ein elektrisches Signal umzuwandeln;
   einen Prozessor (59, 75; 150), der eingerichtet ist, einen Abstand von dem Sensorkopf (20; 131a, 131b) zu dem Messziel (T) basierend auf dem elektrischen Signal zu berechnen, das aus der durch den Lichtempfänger (56a bis 56c, 58a bis 58c, 71a bis 71c, 74a bis 74c; 140a bis 140c) durchgeführten Umwandlung resultiert;
   einen Identifizierer (160), der eingerichtet ist, den Sensorkopf (20; 131a, 131b) basierend auf einem durch das Interferometer (130) erzeugten Beatsignal zu identifizieren; und
   einen Lichteinsteller (170), der eingerichtet ist, eine Lichtmenge, die von dem Sensorkopf (20; 131a, 131b) zu dem Messziel (T) emittiert werden soll, basierend auf dem durch den Identifizierer (160) identifizierten Sensorkopf (20; 131a, 131b) einzustellen,
   wobei das Beatsignal daraus resultiert, dass ein Teil des von der Lichtquelle (51; 110) emittierten und durch das Interferometer (130) empfangenen Lichts von einer Komponente (137a, 137b) des Interferometers (130), die eine reflektierende Oberfläche umfasst, reflektiert wird.

2. Optischer interferometrischer Entfernungssensor (10; 100) nach Anspruch 1, wobei
der Sensorkopf (20; 131a, 131b) einen Einzelpunktkopf (131a) oder einen Mehrpunktkopf (131b) umfasst.

3. Optischer interferometrischer Entfernungssensor (10; 100) nach Anspruch 1 oder Anspruch 2, wobei
der Lichteinsteller (170) eine Lichtmenge, die zu dem Lichtteiler (54a bis 54c; 120; 121) übertragen werden soll, so einstellt, dass sie kleiner oder gleich einem vorbestimmten Wert ist, wenn der Identifizierer (160) den Sensorkopf (20; 131a, 131b) identifiziert.

4. Optischer interferometrischer Entfernungssensor (10; 100) nach Anspruch 3, wobei
der vorbestimmte Wert eine Lichtmenge ist, die für den durch den Identifizierer (160) als ein Mehrpunktkopf (131b) identifizierten Sensorkopf (20; 131a, 131b) eingestellt ist.

5. Optischer interferometrischer Entfernungssensor (10; 100) nach einem der Ansprüche 1 bis 4, wobei
der Identifizierer (160) den Sensorkopf (20; 131a, 131b) basierend auf einer Spitzenfrequenz des Beatsignals und/oder der Anzahl von Spitzen in dem Beatsignal identifiziert.

6. Optischer interferometrischer Entfernungssensor (10; 100) nach einem der Ansprüche 1 bis 5, wobei
sich die reflektierende Oberfläche im Inneren des Sensorkopfs (20; 131a, 131b) befindet.

7. Optischer interferometrischer Entfernungssensor (10; 100) nach Anspruch 6, wobei
sich die reflektierende Oberfläche auf einer Objektivlinse (21; 132a, 132b) befindet, die in dem Sensorkopf (20; 131a, 131b) enthalten ist.

8. Optischer interferometrischer Entfernungssensor (10; 100) nach Anspruch 6 oder Anspruch 7, wobei sich die reflektierende Oberfläche auf einer Kollimationslinse (22a bis 22c; 135a, 135b) befindet, die in dem Sensorkopf (20; 131a, 131b) enthalten ist.

9. Optischer interferometrischer Entfernungssensor (10; 100) nach einem der Ansprüche 1 bis 8, wobei sich die reflektierende Oberfläche im Inneren einer optischen Faser (40) befindet, die eingerichtet ist, das von der Lichtquelle (51; 110) emittierte Licht zu dem Sensorkopf (20; 131a, 131b) zu leiten.

**Revendications**

1. Capteur de distance interférométrique optique (10 ; 100), comprenant :

   une source de lumière (51 ; 110) configurée pour émettre de la lumière avec une longueur d'onde variable ;
   un diviseur de lumière (54a à 54c ; 120 ; 121) configuré pour diviser la lumière émise par la source de lumière (51 ; 110) en une pluralité de faisceaux devant être incidents sur une pluralité de points ;
   un interféromètre (130) configuré pour générer, pour chacun de la pluralité de faisceaux de la lumière divisée incidente sur un point correspondant de la pluralité de points, une lumière d'interférence sur la base d'une lumière de mesure et d'une lumière de référence, la lumière de mesure étant une lumière émise par une tête de capteur (20 ; 131a, 131b) vers une cible de mesure (T) et réfléchie par la cible de mesure (T), la lumière de référence étant une lumière se déplaçant sur un chemin optique au moins partiellement différent d'un chemin optique de la lumière de mesure ;
   un récepteur de lumière (56a à 56c, 58a à 58c, 71a à 71c, 74a à 74c ; 140a à 140c) configuré pour recevoir la lumière d'interférence provenant de l'interféromètre (130) pour convertir la lumière d'interférence en un signal électrique ;
   un processeur (59, 75 ; 150) configuré pour calculer une distance de la tête de capteur (20 ; 131a, 131b) à la cible de mesure (T) sur la base du signal électrique résultant de la conversion effectuée par le récepteur de lumière (56a à 56c, 58a à 58c, 71a à 71c, 74a à 74c ; 140a à 140c) ;
   un identificateur (160) configuré pour identifier la tête de capteur (20 ; 131a, 131b) sur la base d'un signal de battement généré par l'interféromètre (130) ; et
   un ajusteur de lumière (170) configuré pour ajuster une quantité de lumière à émettre par la tête de capteur (20 ; 131a, 131b) vers la cible de mesure (T) sur la base de la tête de capteur (20 ; 131a, 131b) identifiée par l'identificateur (160),
   dans lequel le signal de battement résulte d'une partie de la lumière émise par la source de lumière (51 ; 110) et reçue par l'interféromètre (130) qui est réfléchie par un composant (137a, 137b) de l'interféromètre (130) comprenant une surface réfléchissante.

2. Capteur de distance interférométrique optique (10 ; 100) selon la revendication 1, dans lequel la tête de capteur (20 ; 131a, 131b) comprend une tête à point unique (131a) ou une tête à points multiples (131b).

3. Capteur de distance interférométrique optique (10 ; 100) selon la revendication 1 ou la revendication 2, dans lequel l'ajusteur de lumière (170) ajuste une quantité de lumière à transmettre au diviseur de lumière (54a à 54c ; 120 ; 121) pour qu'elle soit inférieure ou égale à une valeur prédéterminée lorsque l'identificateur (160) identifie la tête de capteur (20 ; 131a, 131b).

4. Capteur de distance interférométrique optique (10 ; 100) selon la revendication 3, dans lequel la valeur prédéterminée est une quantité de lumière ajustée pour la tête de capteur (20 ; 131a, 131b) identifiée comme une tête à points multiples (131b) par l'identificateur (160).

5. Capteur de distance interférométrique optique (10 ; 100) selon l'une quelconque des revendications 1 à 4, dans lequel l'identificateur (160) identifie la tête de capteur (20 ; 131a, 131b) sur la base d'au moins l'un d'une fréquence de crête du signal de battement ou du nombre de crêtes dans le signal de battement.

6. Capteur de distance interférométrique optique (10 ; 100) selon l'une quelconque des revendications 1 à 5, dans lequel la surface réfléchissante est située à l'intérieur de la tête de capteur (20 ; 131a, 131b).

7. Capteur de distance interférométrique optique (10 ; 100) selon la revendication 6, dans lequel la surface réfléchissante est située sur une lentille d'objectif (21 ; 132a, 132b) incluse dans la tête de capteur (20 ;

131a, 131b).

**8.** Capteur de distance interférométrique optique (10 ; 100) selon la revendication 6 ou la revendication 7, dans lequel la surface réfléchissante est située sur une lentille de collimation (22a à 22c ; 135a, 135b) incluse dans la tête de capteur (20 ; 131a, 131b).

**9.** Capteur de distance interférométrique optique (10 ; 100) selon l'une quelconque des revendications 1 à 8, dans lequel la surface réfléchissante est située à l'intérieur d'une fibre optique (40) configurée pour guider la lumière émise par la source de lumière (51 ; 110) vers la tête de capteur (20 ; 131a, 131b).

**FIG. 1**

Current value + 123.45 μm

Setting value + 100.00 μm

Start

Position sensor head — S11

Set measurement condition — S12

Measure target — S13

Output measurement results — S14

End

FIG. 2

Sensor system 1

10                              11                              12

| Displacement sensor | Control device (PLC) | Sensor for control signal input |

| External connection device (PC) |

13

# FIG. 3

```
                    ┌─────────────┐
                    │    Start    │
                    └─────────────┘
                           │
                           ▼
        ┌──────────────────────────────────┐
        │                                  │ ⟋⟍       S21
        │   Detect measurement target      │
        │                                  │
        └──────────────────────────────────┘
                           │
                           ▼
        ┌──────────────────────────────────┐
        │                                  │ ⟋⟍       S22
        │  Instruct displacement sensor to │
        │       perform measurement        │
        └──────────────────────────────────┘
                           │
                           ▼
        ┌──────────────────────────────────┐
        │                                  │ ⟋⟍       S23
        │  Measure target with displacement│
        │              sensor              │
        └──────────────────────────────────┘
                           │
                           ▼
        ┌──────────────────────────────────┐
        │                                  │ ⟋⟍       S24
        │     Output measurement results   │
        │                                  │
        └──────────────────────────────────┘
                           │
                           ▼
                    ┌─────────────┐
                    │     End     │
                    └─────────────┘
```

# FIG. 4

FIG. 5A

FIG. 5B

Sensor head 20

**FIG. 6A**

Optical fiber

**FIG. 6B**

FIG. 7

Start

Perform FFT      S31

Perform conversion to distance      S32

Detect peak      S33

Calculate average      S34

End

**FIG. 8**

FFT

f (t)

Voltage

Time

F (ω)

Voltage

Frequency

**FIG. 9A**

Conversion to distance

Voltage

Frequency

Voltage

Distance

**FIG. 9B**

Peak detection

CH1

Voltage

V1

D1 Distance

CH2

Voltage

V2

D2 Distance

CH3

Voltage

V3

D3 Distance

# FIG. 9C

Current value + 123.45 μm
Setting value + 100.00 μm

Single spot head

# FIG. 10A

Multi-spot head

# FIG. 10B

**FIG. 11**

36

131a

C
B
A

T
T
T

131a

131a

Single spot head

**FIG. 12A**

131b

C
B
A

T

Multi-spot head

**FIG. 12B**

Single spot head

FIG. 13A

Multi-spot head

**FIG. 13B**

Light amount adjustment method M100

```
                        ┌─────────┐
                        │  Start  │
                        └─────────┘
                             │
                             ▼
              ┌──────────────────────────────┐        S110
              │ Adjust amount of light to be less than │
              │ or equal to predetermined value │
              └──────────────────────────────┘
                             │
                             ▼
              ┌──────────────────────────────┐        S120
              │      Detect signal peak       │
              │     within area up to LH      │
              └──────────────────────────────┘
                             │
                             ▼
              ┌──────────────────────────────┐        S130
              │ Calculate distance (position) Lp │
              │  corresponding to signal peak  │
              └──────────────────────────────┘
                             │
                             ▼
                          S140
```

Single spot head          Identify sensor head type based on Lp          Error

S150          S160          Multi-spot head          S170

| Adjust amount of light to correspond to single spot head | Adjust amount of light to correspond to multi-spot head | Stop output from wavelength swept light source 110 |

End

**FIG. 14**

**FIG. 15A**

**FIG. 15B**

137a

135a

131a

Single spot head

# FIG. 16A

A/B/C

131b

137b

135b

135b

137b

135b

137b

C

B

A

Multi-spot head

# FIG. 16B

138

Sensor head

**FIG. 17A**

101

139

Sensor head

**FIG. 17B**

Single spot head

## FIG. 18A

Multi-spot head

## FIG. 18B

Light amount adjustment method M101

```
                        ┌──────────┐
                        │  Start   │
                        └────┬─────┘
                             │
                             ▼
            ┌─────────────────────────────────────┐      S110
            │ Adjust amount of light to be less than │
            │  or equal to predetermined value     │
            └─────────────────┬───────────────────┘
                              │
                              ▼
               ┌──────────────────────────┐          S121
               │    Detect signal peak     │
               │   within area up to LH    │
               └──────────┬───────────────┘
                          │
                          ▼
                                             S141
                      ╱╲
   Single spot head  ╱    ╲   Identify sensor    Error
  ◄──────────────── ╱ head type based ╲ ──────────►
                    ╲  on number of   ╱
                     ╲ signal peaks  ╱
                      ╲             ╱
                       ╲           ╱
                        ╲    │    ╱
     S150        S160    ╲  │   ╱            S170
                          Multi-spot head
        ▼             ▼                          ▼
┌──────────────┐ ┌──────────────┐  ┌────────────────────────┐
│Adjust amount │ │Adjust amount │  │Stop output from wavelength│
│of light to   │ │of light to   │  │ swept light source 110 │
│correspond to │ │correspond to │  │                        │
│single spot   │ │multi-spot    │  │                        │
│head          │ │head          │  │                        │
└──────┬───────┘ └──────┬───────┘  └───────────┬────────────┘
       │                │                       │
       └────────────────┼───────────────────────┘
                        │
                        ▼
                  ┌──────────┐
                  │   End    │
                  └──────────┘
```

**FIG. 19**

Reference surface

121

Light
splitter

A

B

C

T

**FIG. 20A**

121

Light
splitter

A

B

C

Lm1

Lm2

Lm3

Lr1

Lr2

Lr3

Reference surface

T

**FIG. 20B**

**FIG. 20C**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022038245 A
- JP 2686124 B
- US 20070171425 A1
- WO 2005024379 A2